(19) Europäisches Patentamt
European Patent Office
Office européen des brevets

(11) Veröffentlichungsnummer: **0 110 205**
**B1**

(12) **EUROPÄISCHE PATENTSCHRIFT**

(45) Veröffentlichungstag der Patentschrift: **09.12.87**

(51) Int. Cl.⁴: **C 09 K 19/60**, C 09 K 19/30

(21) Anmeldenummer: **83111169.5**

(22) Anmeldetag: **09.11.83**

(54) **Farbige Flüssigkristallmischungen enthaltend Phenyläthane.**

(30) Priorität: **29.11.82 CH 6923/82**
**30.09.83 CH 5303/83**

(43) Veröffentlichungstag der Anmeldung:
**13.06.84 Patentblatt 84/24**

(45) Bekanntmachung des Hinweises auf die Patenterteilung:
**09.12.87 Patentblatt 87/50**

(84) Benannte Vertragsstaaten:
**CH DE FR GB LI**

(56) Entgegenhaltungen:
**FR - A - 55 842**
**GB - A - 2 107 733**
**US - A - 4 393 258**

**MOLECULAR CRYSTALS & LIQUID CRYSTALS, 1979, Band 55, Seiten 1-32, GORDON & BREACH SCIENCE PUBLISHERS. INC., New York, US; R.J. COX: "Liquid Crystal Guest-Host Systems"**

(73) Patentinhaber: **F. HOFFMANN-LA ROCHE & CO. Aktiengesellschaft, CH-4002 Basel (CH)**

(72) Erfinder: **Boller, Arthur, Dr., Benkenstrasse 65, CH-4102 Binningen (CH)**
Erfinder: **Petrzilka, Martin, Dr., Violaweg 74, CH-4303 Kaiseraugst (CH)**
Erfinder: **Germann, Alfred, Alemannengasse 109, CH-4058 Basel (CH)**
Erfinder: **Schadt, Martin, Dr., Liestalerstrasse 77, CH-4411 Seltisberg (CH)**

(74) Vertreter: **Cottong, Norbert A. et al, Grenzacherstrasse 124 Postfach 3255, CH-4002 Basel (CH)**

**EP 0 110 205 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft farbstoffhaltige Flüssigkristallmischungen, sowie deren Verwendung in elektrooptischen Vorrichtungen.

Die erfindungsgemässen Mischungen sind dadurch gekennzeichnet, dass sie eine oder mehrere Verbindungen der allgemeinen Formel

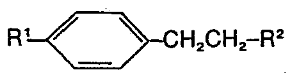
I

worin
$R^1$ Alkyl, Alkoxy, p-Alkylphenyl, p-Alkoxyphenyl, trans-4-Alkylcyclohexyl, 4'-Alkyl-4-biphenylyl, p-(trans-4-Alkylcyclohexyl)phenyl, 2-(trans-4-Alkylcyclohexyl)äthyl oder p-[2-(trans-4-Alkylcyclohexyl)äthyl]phenyl und
$R^2$ trans-4-Alkylcyclohexyl bedeuten, oder
$R^1$ trans-4-Alkylcyclohexyl und
$R^2$ p-(trans-4-Alkylcyclohexyl)phenyl, p-[2-(trans-4-Alkylcyclohexyl)äthyl]phenyl oder 4'-(trans-4-Alkylcyclohexyl)-4-biphenylyl bedeuten, oder
$R^1$ p-Alkylphenyl und
$R^2$ p-[2-(trans-4-Alkylcyclohexyl)äthyl]phenyl bedeuten, und die Alkyl- und Alkoxyreste in den Substituenten $R^1$ und $R^2$ geradkettige Gruppen mit 1 bis 7 Kohlenstoffatomen bezeichnen,
und einen oder mehrere dichroitische Farbstoffe der allgemeinen Formeln

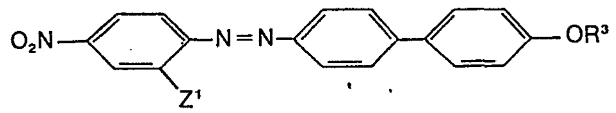
II

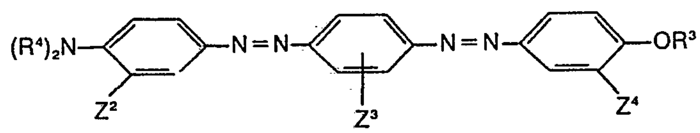
III

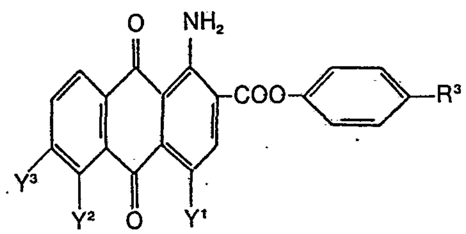
IV

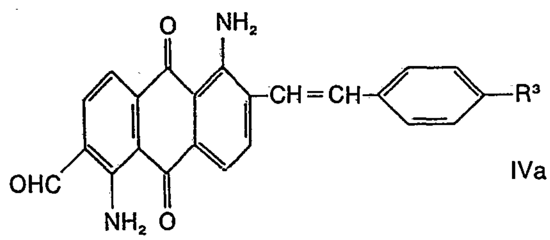
IVa

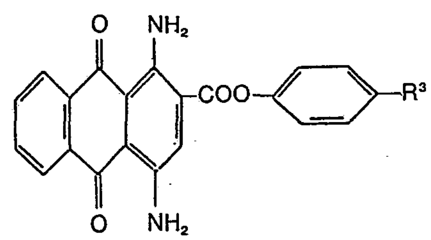
V

worin $R^3$ geradkettiges $C_1$–$C_{12}$-Alkyl und $R^4$ geradkettiges $C_1$–$C_4$-Alkyl darstellen, $Z^1$ Wasserstoff oder Chlor bezeichnet, eine der Gruppen $Z^2$, $Z^3$ und $Z^4$ Chlor und die beiden andern Wasserstoff bedeuten, und $Y^1$ Wasserstoff, $Y^2$ Amino und $Y^3$ Methyl bezeichnen

oder $Y^1$ Hydroxy und $Y^2$ und $Y^3$ Wasserstoff bezeichnen, enthalten.

Die geradkettigen Alkylgruppen umfassen je nach der angegebenen Zahl der Kohlenstoffatome Reste wie Methyl, Äthyl, Propyl, Butyl, Pentyl, Hexyl, Heptyl, Octyl, Nonyl, Decyl, Undecyl und Dodecyl und die geradkettigen Alkoxygruppen umfassen die Reste Methoxy, Äthoxy, Propyloxy, Butyloxy, Pentyloxy, Hexyloxy und Heptyloxy.

Flüssigkristalline Gemische, welche aus einer Flüssigkristallmatrix (Wirt) und dichroitischen Farbstoffen (Gast) bestehen, weisen je nach Orientierung eine unterschiedliche Lichtabsorption auf. Dieser Effekt ist in der Literatur als Gast-Wirt-Effekt (Guest-Host-Effekt) bekannt und wird in elektrooptischen Anzeigevorrichtungen ausgenützt. Es ist ferner bekannt, dass durch Zusatz eines optisch aktiven Materials zu derartigen Gemischen der Kontrast verbessert werden kann.

Bei der Gast-Wirt-Zelle (Guest-Host-Display) handelt es sich im wesentlichen um einen Kondensator, wobei mindestens eine Elektrode lichtdurchlässig ist und das Dielektrikum von einem nematischen oder cholesterischen Flüssigkristall gebildet wird, welcher einen oder mehrere dichroitische Farbstoffe enthält. Da die verwendbaren Farbstoffe meist positiven Dichroismus aufweisen, d.h. das Übergangsmoment der Absorption von sichtbarem Licht annähernd in Richtung der Moleküllängsachse liegt, entspricht die homogene Ausrichtung des Flüssigkristalls (Moleküllängsachsen parallel zur Plattenoberfläche) im allgemeinen dem farbigen Zustand und die homöotrope Ausrichtung (Moleküllängsachsen senkrecht zur Plattenoberfläche) dem farblosen Zustand der Zelle. Beispielsweise wird ein durch Behandlung der Plattenoberfläche homogen orientierter Flüssigkristall mit positiver dielektrischer Anisotropie ($\Delta\varepsilon = \varepsilon_{\|} - \varepsilon_{\perp} > 0$, wobei $\varepsilon_{\|}$ die Dielektrizitätskonstante entlang der Moleküllängsachse und $\varepsilon_{\perp}$ die Dielektrizitätskonstante senkrecht dazu bedeuten) durch Anlegen einer Spannung homöotrop ausgerichtet. Auf diese Weise können farblose Zeichen auf farbigem bzw. schwarzem Untergrund angezeigt werden («negativer» Kontrast). Demgegenüber wird ein durch Behandlung der Plattenoberflächen homöotrop orientierter Flüssigkristall mit negativer dielektrischer Anisotropie durch Anlegen einer Spannung homogen ausgerichtet, wodurch die Anzeige farbiger bzw. schwarzer Bildelemente auf farblosem Untergrund ermöglicht wird («positiver» Kontrast).

Ferner wurde zur Verbesserung des Multiplexverhältnisses bei der Multiplex-Ansteuerung von Flüssigkristallanzeigen, insbesondere von Drehzellen und Guest-Host-Zellen, eine Zwei-Frequenz-Matrix-Adressierung vorgeschlagen (z.B. Deutsche Offenlegungsschriften 2 856 134 und 2 907 940). Hierbei wird der Umstand ausgenützt, dass die dielektrische Anisotropie von Flüssigkristallen, welche beim Anlegen einer niederfrequenten Spannung eine positive Anisotropie der Dielektrizitätskonstante besitzen, bei hohen Frequenzen negativ wird. Mit diesem Verfahren können sowohl positive als auch negative Kontraste erzeugt werden. Ferner bietet das Zwei-Frequenz-Verfahren den Vorteil, dass nicht nur der Einschaltvorgang, sondern auch der Abschaltvorgang durch Anlegen einer entsprechenden Wechselspannung direkt beeinflusst werden kann, wodurch eine Beschleunigung des Abschaltvorganges erzielt wird.

Die vorbekannten farbstoffhaltigen Flüssigkristallmischungen haben vor allem den Nachteil, dass entweder die Löslichkeit oder der Ordnungsgrad der Farbstoffe zu klein oder die Stabilität gegen UV-Strahlung ungenügend ist. Ferner besitzen die vorbekannten Mischungen im allgemeinen relativ lange Ansprechzeiten.

Aufgabe der vorliegenden Erfindung war daher die Bereitstellung neuer farbiger Mischungen, welche die erwähnten Nachteile nicht oder in geringerem Masse aufweisen.

Überraschenderweise wurde nun gefunden, dass die Farbstoffe der obigen Formeln II–V und IVa in Wirt-Phasen, welche eine oder mehrere Verbindungen der Formel I enthalten, einen höheren Ordnungsgrad aufweisen als in vorbekannten Wirt-Phasen, was eine deutliche Verbesserung der Kontraste ermöglicht (z.B. entspricht eine Erhöhung des Ordnungsgrades von 0,77 auf 0,82 einer Verbesserung des Kontrastes um ca. 33%). Die Farbstoffe der Formeln II–V und IVa besitzen in den erfindungsgemässen Mischungen eine gute Löslichkeit, sind chemisch stabil und weisen eine ausreichende Stabilität gegen UV-Strahlung auf. Die Verbindungen der Formel II sind gelbe Farbstoffe, die Verbindungen der Formeln III, IV und IVa sind rote Farbstoffe, und die Verbindungen der Formel V sind blaue Farbstoffe. Ferner ergänzen sich die Absorptionsbereiche dieser Farbstoffe vorzüglich, so dass Mischungen nahezu beliebiger Farbe und insbesondere auch schwarze Mischungen, welche im gesamten sichtbaren Bereich eine hohe Absorption aufweisen, hergestellt werden können.

Weiterhin besitzen die erfindungsgemässen Mischungen eine niedere Viskosität und dementsprechend kurze Ansprechzeiten. Die Klärpunkte der Mischungen werden durch Zusatz von Farbstoffen der Formeln II–V und IVa meist sogar leicht erhöht. Zudem ermöglicht die gute Löslichkeit dieser Farbstoffe in den vorliegenden Wirt-Phasen die Herstellung farbiger Mischungen mit hoher optischer Dichte, welche auch bei Temperaturen von etwa −30 °C noch keine Kristallisation oder smektische Tendenzen ergeben. Die Verbindungen der Formel I besitzen kleine absolute Werte der dielektrischen Anisotropie. Durch Zusatz geeigneter Verbindungen können jedoch leicht Mischungen mit grosser positiver oder negativer Anisotropie der Dielektrizitätskonstante oder Mischungen, welche für die Zwei-Frequenz-Matrix-Adressierung geeignet sind, hergestellt werden. Ferner können zur Verbesserung des Kontrastes selbstverständlich auch geeignete optisch aktive Materialien beigemischt werden.

Der Gehalt an Verbindungen der Formel I in den erfindungsgemässen Mischungen kann in einem breiten Bereich variieren. Bevorzugt enthalten die erfindungsgemässen Mischungen etwa 7–90 Gew.-% und besonders bevorzugt etwa 10–70 Gew.-% an Verbindungen der Formel I. Vorzugsweise liegt jedoch der Anteil der einzelnen Verbindungen der Formel I im Falle der 2-Ring-Verbindungen nicht über etwa 50 Gew.-% und im Falle der Verbindungen mit 3–5 Ringen nicht über etwa 25 Gew.-%. Ferner sind diejenigen Mischungen bevorzugt, welche mindestens eine unter Formel I fallende Verbindung mit 3–5 Ringen enthalten.

In Formel I bedeuten vorzugsweise
$R^1$ Alkyl, Alkoxy, trans-4-Alkylcyclohexyl, 4'-Alkyl-4-biphenylyl oder

p-(trans-4-Alkylcyclohexyl)phenyl und
$R^2$ trans-4-Alkylcyclohexyl, oder
$R^1$ trans-4-Alkylcyclohexyl und
$R^2$ p-[2-(trans-4-Alkylcyclohexyl)äthyl]phenyl oder 4'-(trans-4-Alkylcyclohexyl)-4-biphenylyl.

Besonders bevorzugt sind Verbindungen der Formel I, worin
$R^1$ Alkoxy, trans-4-Alkylcyclohexyl oder p-(trans-4-Alkylcyclohexyl)phenyl und
$R^2$ trans-4-Alkylcyclohexyl
bedeuten, oder
$R^1$ trans-4-Alkylcyclohexyl und
$R^2$ p-[2-(trans-4-Alkylcyclohexyl)äthyl]phenyl
bedeuten. Ferner sind grundsätzlich diejenigen Verbindungen der Formel I bevorzugt, worin die Summe der Kohlenstoffatome in den beiden endständigen Alkyl- bzw. Alkoxyresten der Substituenten $R^1$ und $R^2$ 5 bis 10 beträgt. Beispiele besonders bevorzugter Verbindungen sind die in den untenstehenden Mischungsbeispielen genannten Verbindungen der Formel I.

Der Gehalt an Farbstoffen der Formeln II–V und IVa in den erfindungsgemässen Mischungen kann aufgrund ihrer guten Löslichkeit ebenfalls in einem relativ grossen Bereich variieren. Vorzugsweise beträgt die Gesamtmenge an Farbstoffen der Formeln II–V und IVa jedoch etwa 0,2 bis 12 Gew.-% und besonders bevorzugt etwa 0,5 bis 8 Gew.-%. Die erfindungsgemässen Mischungen können einen oder mehrere Farbstoffe enthalten. Vorzugsweise enthalten sie höchstens etwa 8 Gew.-% an Farbstoffen der Formel II, höchstens etwa 4 Gew.-% an Farbstoffen der Formel III, höchstens etwa 4 Gew.-% an Farbstoffen der Formel IV, höchstens etwa 4 Gew.-% an Farbstoffen der Formel IVa und höchstens etwa 6 Gew.-% an Farbstoffen der Formel V. Bei Verwendung mehrerer Farbstoffe wird ihr Mengenverhältnis hauptsächlich durch die gewünschte Farbe bestimmt. Die Doppelbindung –CH=CH– in Formel IVa ist vorzugsweise trans-disubstituiert.

Besonders bevorzugt sind schwarze Mischungen, welche mindestens eine Verbindung der Formel I, mindestens eine Verbindung der Formel III, IV oder IVa und mindestens eine Verbindung der Formel V enthalten. Derartige Mischungen enthalten zweckmässigerweise etwa 0,1–0,4 Gewichtsteile Farbstoff der Formel II und etwa 0,2–0,6 Gewichtsteile Farbstoff der Formeln III, IV oder IVa pro Gewichtsteil Farbstoff der Formel V und vorzugsweise etwa 0,25–0,30 Gewichtsteile Farbstoff der Formel II und etwa 0,25–0,50 Gewichtsteile Farbstoff der Formeln III, IV oder IVa pro Gewichtsteil Farbstoff der Formel V.

In den obigen Formeln II–V und IVa bedeutet vorzugsweise $R^3$ $C_5$–$C_9$-Alkyl, insbesondere Heptyl, und $R^4$ Methyl oder Äthyl, insbesondere Methyl. $Z^4$ steht vorzugsweise für Chlor und $Z^2$ und $Z^3$ für Wasserstoff.

Die Verbindungen der Formeln II–V und IVa sind bekannt oder können nach an sich bekannten Methoden hergestellt werden.

Die Verbindungen der Formel I, worin $R^1$ Alkyl, Alkoxy, p-Alkylphenyl oder p-Alkoxyphenyl und $R^2$ trans-4-Alkylcyclohexyl bedeuten, sind bekannt. Die übrigen Verbindungen der Formel I sind neu und bilden ebenfalls Gegenstand der vorliegenden Erfindung. Sie können anhand der folgenden Reaktionsschemata 1 und 2 hergestellt werden, worin
$R^5$ trans-4-Alkylcyclohexyl,
4'-Alkyl-4-biphenylyl,
p-(trans-4-Alkylcyclohexyl)phenyl oder
2-(trans-4-Alkylcyclohexyl)äthyl und
$R^6$ trans-4-Alkylcyclohexyl
bedeuten, oder
$R^5$ trans-4-Alkylcyclohexyl und
$R^6$ p-(trans-4-Alkylcyclohexyl)phenyl,
p-[2-(trans-4-Alkylcyclohexyl)äthyl]phenyl oder
4'-(trans-4-Alkylcyclohexyl)-4-biphenylyl
bedeuten oder
$R^5$ p-Alkylphenyl und
$R^6$ p-[2-(trans-4-Alkylcyclohexyl)äthyl]phenyl
bedeuten und die Reste $R^7$ und $R^8$ sowie die Alkylgruppen in den Substituenten $R^5$ und $R^6$ geradkettiges $C_1$–$C_7$-Alkyl darstellen.

Schema 1

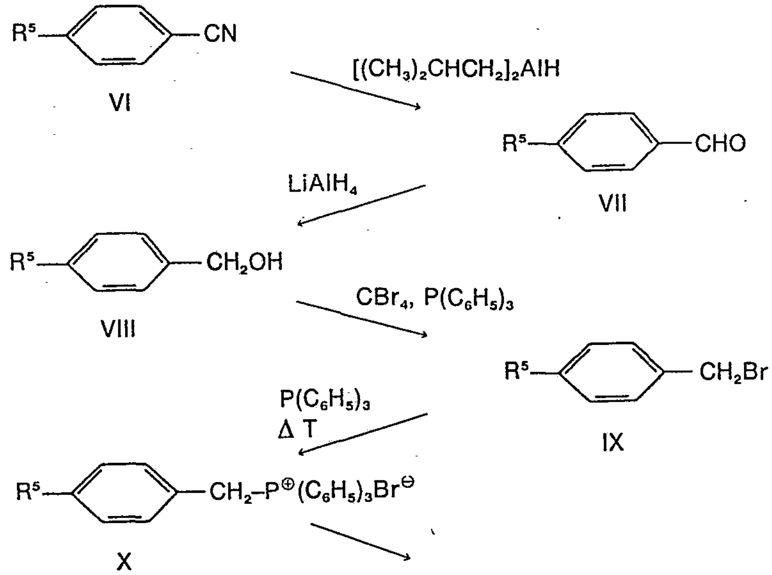

VI
VII
VIII
IX
X

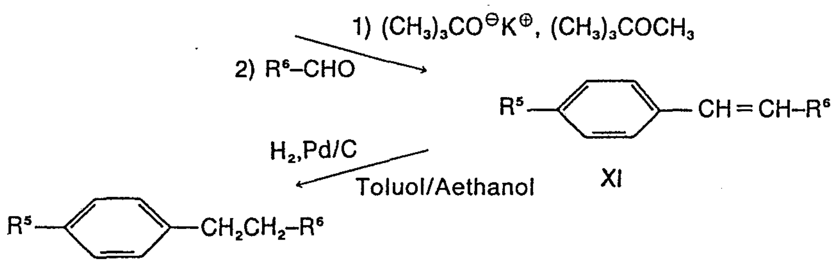


XI

IA

Schema 2

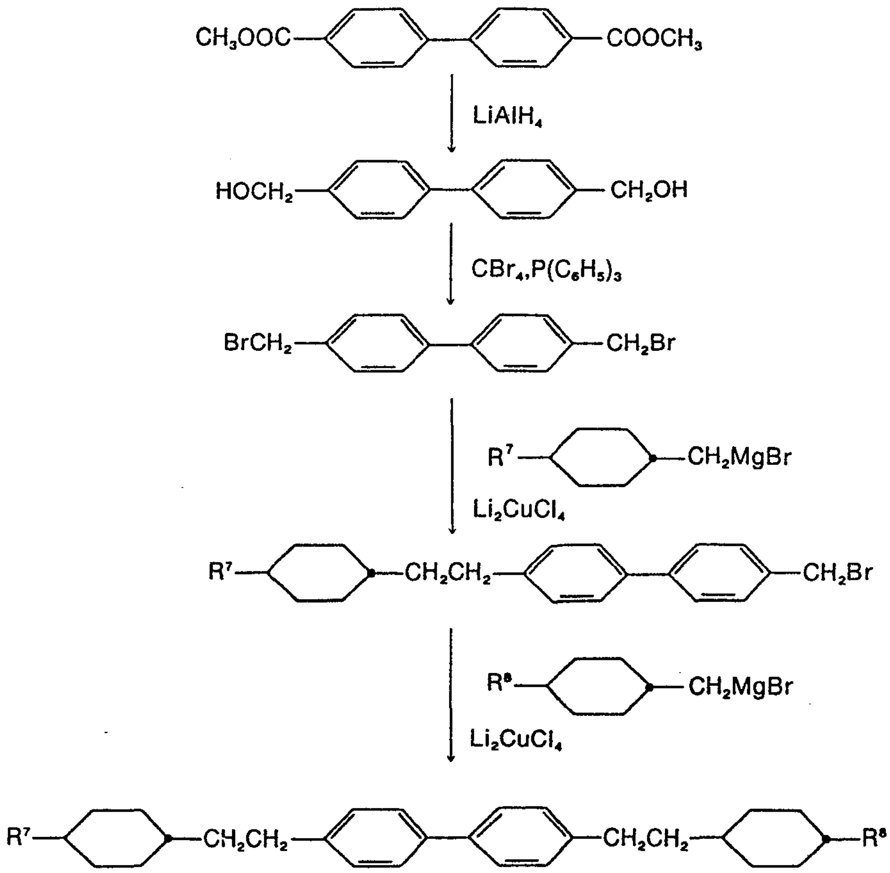


XII

XIII

XIV

XV

IB

Die Verbindungen der Formel $R^6$–CHO in Schema 1 können in einfacher Weise aus bekannten Verbindungen erhalten werden; beispielsweise können die trans-4-Alkylcyclohexancarboxaldehyde durch Rosenmund-Reduktion der entsprechenden Säurechloride und die übrigen Verbindungen durch Reduktion der entsprechenden Cyano-Verbindungen (in analoger Weise zur Herstellung der Verbindungen der Formel VII) erhalten werden.

Durch Umsetzung der Verbindung der Formel XIV mit Grignard-Reagenzien gemäss Schema 2 können Verbindungen der Formel XV oder direkt Verbindungen der Formel IB, worin $R^7$ und $R^8$ gleiche Bedeutung haben, erhalten werden. Bei Verwendung von mindestens etwa 2 Mol Grignard-Reagens pro Mol der Verbindung der Formel XIV wird im allgemeinen vorwiegend direkt eine Verbindung der Formel IB gebildet.

Je nach beabsichtigter Verwendung können die erfindungsgemässen Mischungen weitere Substanzen enthalten, wie z.B. Substanzen aus den Klassen der Schiffschen Basen,
Phenylbenzoate,
Cyclohexancarbonsäurephenylester und
-cyclohexylester,
Bi- und Terphenyle, Phenylcyclohexane,
Cyclohexylbiphenyle,
Phenyl- und Diphenylpyrimidine,
Cyclohexyl-phenylpyrimidine, Phenyldioxane,
Phenylpyridazine,
2,3-Dicyano-1,4-phenylenderivate
und dergleichen. Derartige Substanzen sind dem Fachmann bekannt und viele davon sind zudem im Handel erhältlich.

Die erfindungsgemässen Mischungen mit positiver dielektrischer Anisotropie enthalten zusätzlich zu einer oder mehreren Verbindungen der

Formel I und einem oder mehreren Farbstoffen der Formeln II–V und IVa vorzugsweise eine oder mehrere Verbindungen der allgemeinen Formeln

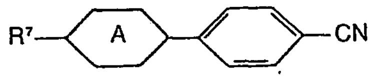
XVI

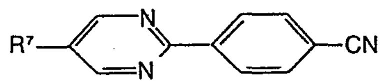
XVII

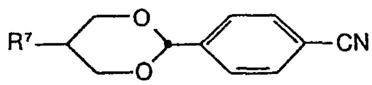
XVIII

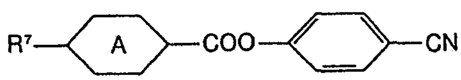
XIX

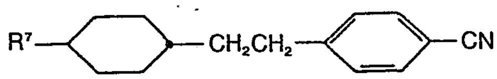
XX

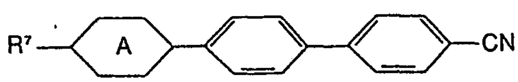
XXI

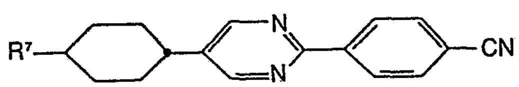
XXII

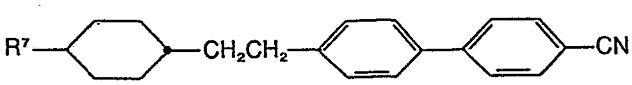
XXIII

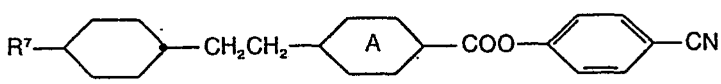
XXIIIa

worin $R^7$ geradkettiges $C_1$–$C_7$-Alkyl und Ring A 1,4-Phenylen oder trans-1,4-Cyclohexylen bedeuten.

Besonders bevorzugt werden Verbindungen der Formeln XVI, XVII, XXI und XXII verwendet. Der Gehalt an Verbindungen der Formeln XVI–XXIII beträgt zweckmässigerweise etwa 10–60 Gew.-% und vorzugsweise etwa 20–40 Gew.-%.

Die erfindungsgemässen Mischungen mit negativer dielektrischer Anisotropie enthalten zusätzlich zu einer oder mehreren Verbindungen der Formel I und einem oder mehreren Farbstoffen der Formeln II–V und IVa vorzugsweise eine oder mehrere Verbindungen der allgemeinen Formeln

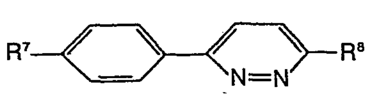
XXIV

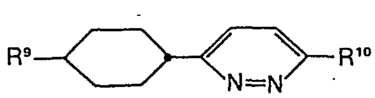
XXV

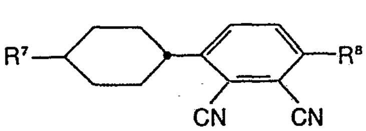
XXVI

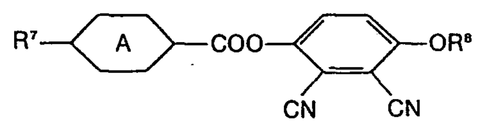
XXVII

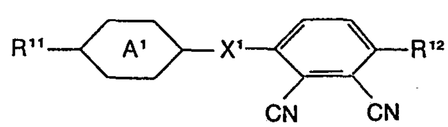
XXVIII

worin $R^7$ und $R^8$ geradkettiges $C_1$–$C_7$-Alkyl und Ring A 1,4-Phenylen oder trans-1,4-Cyclohexylen bezeichnen; $R^9$ geradkettiges $C_1$–$C_{12}$-Alkyl und $R^{10}$ geradkettiges $C_1$–$C_{10}$-Alkyl, $C_2$–$C_{10}$-1-Alkinyl, $C_1$–$C_{10}$-Alkoxy, p-($C_1$–$C_{10}$-Alkyl)phenyl, p-($C_1$–$C_{10}$-Alkoxy)phenyl oder trans-4-($C_1$–$C_{10}$-Alkyl)cyclohexyl bedeuten; $R^{11}$ und $R^{12}$ geradkettiges $C_1$–$C_{12}$-Alkyl oder an einem aromatischen Ring auch geradkettiges $C_1$–$C_{12}$-Alkoxy bezeichnen, oder einer der Reste $R^{11}$ und $R^{12}$ auch eine Gruppe der allgemeinen Formel

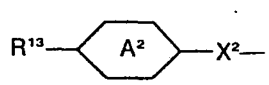
XXIX

bezeichnet; $X^1$ und $X^2$ für einfache Kovalenzbindungen oder eine dieser Gruppen auch für $-CH_2CH_2-$ stehen; die Ringe $A^1$ und $A^2$ 1,4-Phenylen oder, sofern $X^1$ oder $X^2$ für $-CH_2CH_2-$ steht, auch trans-1,4-Cyclohexylen darstellen; und $R^{13}$ geradkettiges $C_1$–$C_{12}$-Alkyl oder an einem aromatischen Ring $A^2$ auch geradkettiges $C_1$–$C_{12}$-Alkoxy bedeutet.

Besonders bevorzugt werden Verbindungen der Formeln XXV und XXVIII verwendet. Der Gehalt an Verbindungen der Formeln XXIV–XXVIII kann im allgemeinen etwa 10–60 Gew.-% und vorzugsweise etwa 20–40 Gew.-% betragen. Da ein Teil der Verbindungen der Formeln XXIV–XXVIII jedoch keine enantiotropen flüssigkristallinen Phasen besitzen, sollte darauf geachtet werden, dass das Restgemisch (bestehend aus den übrigen Komponenten der Gesamtmischung) einen ausreichend grossen Mesophasenbereich aufweist.

Die erfindungsgemässen Mischungen, welche sich für die Zwei-Frequenz-Matrix-Adressierung eignen, enthalten zusätzlich zu einer oder mehreren Verbindungen der Formel I und einem oder mehreren Farbstoffen der Formeln II–V und IVa eine oder mehrere Verbindungen mit niedriger «Cross-over-Frequenz» $f_c$ (dielektrische Relaxationsfrequenz, bei welcher $\varepsilon_{\parallel} = \varepsilon_{\perp}$ wird; vorzugsweise ist $f_c \leqslant 15$ kHz bei 20 °C) im Gesamtgemisch und grosser positiver Anisotropie der Dielektrizitätskonstante bei niederfrequenten Spannungen (vorzugsweise ist $\Delta\varepsilon > 10$). Bevorzugte derartige Verbindungen sind die Verbindungen der allgemeinen Formel

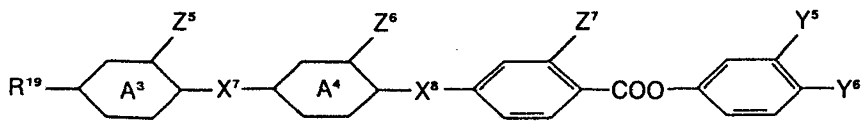
XXX

worin $X^8$ eine einfache Kovalenzbindung oder $-COO-$ bezeichnet; $X^7$ eine einfache Kovalenzbindung, $-COO-$, $-CH_2CH_2-$ oder, sofern $X^8$ $-COO-$ bezeichnet, auch 1,4-Phenylen bedeutet; Ring $A^3$ für einen Benzolring oder für trans-1,4-Cyclohexylen steht; Ring $A^4$ einen Benzolring oder, sofern $X^8$ $-COO-$ und $X^7$ eine einfache Kovalenzbindung, $-COO-$ oder $-CH_2CH_2-$ bezeichnet, auch trans-1,4-Cyclohexylen darstellt; die Reste $Z^5$, $Z^6$ und $Z^7$ Wasserstoff oder an einem Benzolring, welcher nicht mit einem weiteren Ring über eine einfache Kovalenzbindung direkt verknüpft ist, auch Halogen, Cyano oder Methyl bedeuten; $Y^6$ Cyano, Nitro, 2,2-Dicyanovinyl oder, sofern $Y^5$ für Wasserstoff steht, auch 2,2-Dicyano-1-methylvinyl darstellt; $Y^5$ Halogen, Cyano, $C_1$–$C_3$-Alkyl oder, sofern $X^7$ für p-Phenylen oder $Y^6$ für Nitro steht, oder $Z^5$ und/oder $Z^6$ von Wasserstoff verschieden ist, auch Wasserstoff bezeichnet; und $R^{19}$ $C_1$–$C_{12}$-Alkyl oder an einem Benzolring auch $C_1$–$C_{12}$-Alkoxy bedeutet,

und die Verbindungen der allgemeinem Formel

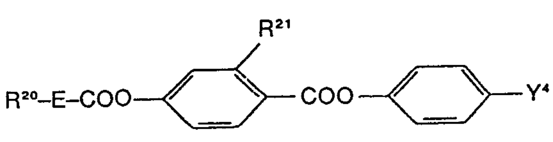
XXXI

worin $R^{21}$ Wasserstoff, Halogen oder Cyano bezeichnet; $Y^4$ Cyano, 2,2-Dicyanovinyl oder 2,2-Dicyano-1-methylvinyl darstellt; $R^{20}$ und E zusammen

p-$R^{20}$-Phenyl, trans-4-$R^{20}$-Cyclohexyl,
4′-$R^{20}$-4-Biphenylyl,
p-(trans-4-$R^{20}$-Cyclohexyl)phenyl,
p-(5-$R^{20}$-2-Pyrimidinyl)phenyl,
p-[2-(p′-$R^{20}$-Phenyl)äthyl]phenyl,
p-[2-(trans-4-$R^{20}$-Cyclohexyl)äthyl]phenyl,
trans-4-[2-(p-$R^{20}$-Phenyl)äthyl]cyclohexyl oder
trans-4-[2-(trans-4-$R^{20}$-Cyclohexyl)äthyl]cyclohexyl

bedeutet; und $R^{20}$ geradkettiges $C_1$–$C_{12}$-Alkyl oder an einem Benzolring auch geradkettiges $C_1$–$C_{12}$-Alkoxy bezeichnet.

Der obige Ausdruck «Halogen» steht für Fluor, Chlor oder Brom. Vorzugsweise bedeuten die lateralen Substituenten $Z^5$, $Z^6$, $Z^7$ und $R^{21}$ Wasserstoff oder Chlor. Der Gehalt an Verbindungen der Formeln XXX und XXXI beträgt zweckmässigerweise etwa 5–40 Gew.-% und vorzugsweise etwa 10–30 Gew.-% im Gesamtgemisch. Zur Verbesserung der dielektrischen Anisotropie bei hochfrequenten Spannungen enthalten die erfindungsgemässen Mischungen, die für die Zwei-Frequenz-Matrix-Adressierung verwendet werden, vorzugsweise noch eine oder mehrere Verbindungen der Formeln XXIV–XXVIII. Der Anteil dieser Verbindungen im Gesamtgemisch beträgt bevorzugt etwa 3–50 Gew.-% und besonders bevorzugt etwa 3–40 Gew.-%.

Die erfindungsgemässen Mischungen können ferner optisch aktive Verbindungen, beispielsweise optisch aktive Biphenyle, Cholesterylchlorid, Cholesterylester und dergleichen, enthalten. Derartige Zusätze sind dem Fachmann bekannt. Der Anteil solcher Verbindungen wird vor allem durch die gewünschte Ganghöhe (pitch) bestimmt. Vorzugsweise beträgt ihr Anteil im Gesamtgemisch höchstens etwa 4 Gew.-%.

Weiterhin können die erfindungsgemässen Mischungen zusätzlich zu Verbindungen der Formel I weitere Verbindungen mit kleinem absolutem Betrag der dielektrischen Anisotropie enthalten. Bevorzugte derartige Verbindungen sind die Verbindungen der allgemeinen Formeln

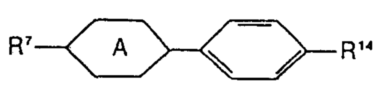
XXXII

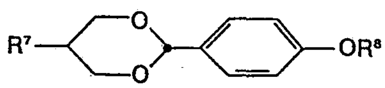

XXXIII

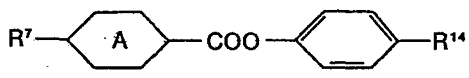

XXXIV

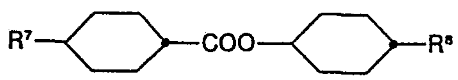

XXXV

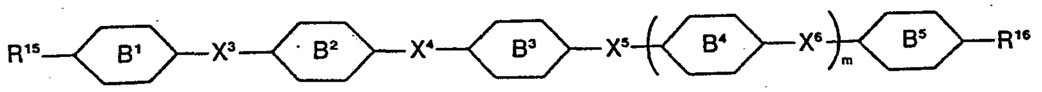

XXXVI

worin $R^7$ und $R^8$ geradkettiges $C_1$–$C_7$-Alkyl bedeuten, $R^{14}$ geradkettiges $C_1$–$C_8$-Alkyl oder $C_1$–$C_8$-Alkoxy bezeichnet und Ring A 1,4-Phenylen oder trans-1,4-Cyclohexylen darstellt; m für 0 oder 1 steht; eine der Gruppen $X^3$ und $X^4$ –COO– oder –OOC– und die übrigen der Gruppen $X^3$, $X^4$, $X^5$ und $X^6$ eine einfache Kovalenzbindung bedeuten, oder eine dieser Gruppen auch $-CH_2CH_2-$ bedeutet; die Ringe $B^1$ und $B^5$ eine Gruppe der Formel

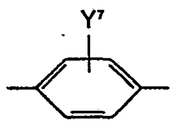

XXXVII

oder trans-1,4-Cyclohexylen bezeichnen; die Ringe $B^2$, $B^3$ und $B^4$ eine Gruppe der Formel XXXVII oder, sofern sie nicht mit mindestens einem der beiden andern dieser Ringe durch eine einfache Kovalenzbindung verknüpft sind, auch trans-1,4-Cyclohexylen darstellen; $Y^7$ Wasserstoff oder an einem der Ringe der Formel XXXVII, welcher nicht mit einem weiteren Ring über eine einfache Kovalenzbindung verknüpft ist, auch Fluor, Chlor oder Methyl bedeutet; $R^{15}$ und $R^{16}$ geradkettiges $C_1$–$C_7$-Alkyl oder an einem Ring der Formel XXXVII auch geradkettiges $C_1$–$C_7$-Alkoxy bezeichnen,
und insbesondere die Verbindungen der Formeln XXXII, XXXIV und XXXVI. Der Anteil an Verbindungen der Formeln XXXII–XXXVI beträgt vorzugsweise höchstens etwa 50 Gew.-%. Solche Verbindungen können jedoch auch ganz fehlen.

Die Herstellung der erfindungsgemässen flüssigkristallinen Mischungen kann in an sich bekannter Weise erfolgen, z.B. durch Erhitzen einer Mischung der Bestandteile auf eine Temperatur knapp oberhalb des Klärpunktes und anschliessendes Abkühlen.

Die Herstellung einer elektro-optischen Vorrichtung enthaltend eine erfindungsgemässe Mischung kann ebenfalls in an sich bekannter Weise erfolgen, z.B. durch Evakuieren einer geeigneten Zelle und Einbringen der Mischung in die evakuierte Zelle.

Die Verbindungen der Formel XXIIIa sind neu. Sie können in an sich bekannter Weise durch Veresterung hergestellt werden.

Die Verbindungen der Formel XXV sind ebenfalls neu. Sie können in an sich bekannter Weise dadurch hergestellt werden, dass man

a) zur Herstellung der Verbindungen der Formel XXV, worin $R^{10}$ eine Alkyl-, p-Alkylphenyl, p-Alkoxyphenyl oder trans-4-Alkylcyclohexylgruppe darstellt, eine Verbindung der allgemeinen Formel

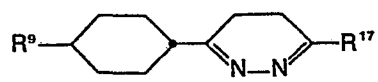

XXXVIII

worin $R^{17}$ eine
Alkyl-, p-Alkylphenyl, p-Alkoxyphenyl oder
trans-4-Alkylcyclohexylgruppe
darstellt, die Alkyl- und Alkoxyreste in $R^{17}$ geradkettige Reste mit 1 bis 10 Kohlenstoffatomen sind, und $R^9$ die obige Bedeutung hat,
oder ein tautomeres Dihydropyridazin oxidiert (z.B. mit
2,3-Dichlor-5,6-dicyano-p-benzochinon
in Dioxan, mit Natriumnitrit in Eisessig und Äthanol, mit Isopentylnitrit in Eisessig oder vorzugsweise durch katalytische Dehydrierung mit Palladium, Platin und dergleichen), oder

b) zur Herstellung der Verbindungen der Formel XXV, worin $R^{10}$ eine Alkoxygruppe darstellt, eine Verbindung der allgemeinen Formel

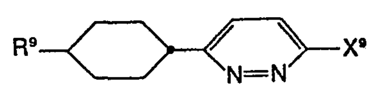

XXXIX

worin $X^9$ Chlor oder Brom bezeichnet und $R^9$ die obige Bedeutung hat,
mit einem Alkalimetallalkoholat (z.B. Natriumalkanolat) umsetzt, oder

c) zur Herstellung der Verbindungen der Formel XXV, worin $R^{10}$ die Äthinylgruppe darstellt, eine Verbindung der allgemeinen Formel

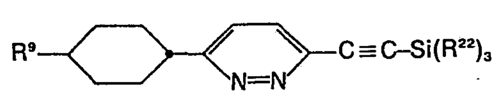

XL

worin $R^{22}$ eine Alkylgruppe mit 1 bis 5 Kohlenstoffatomen bezeichnet und $R^9$ die obige Bedeutung hat,

mit Base (z.B. Kaliumhydroxid, Natriumhydroxid oder Butyllithium) umsetzt, oder

d) zur Herstellung der Verbindungen der Formel XXV, worin $R^{10}$ eine 1-Alkinylgruppe mit 3 bis 10 Kohlenstoffatomen darstellt, eine Verbindung der allgemeinen Formel

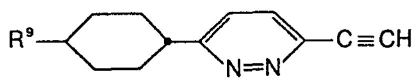

XLI

worin $R^9$ die obige Bedeutung hat, mit Base (z.B. Butyllithium, Methyllithium, Natriumamid oder Lithiumdiisopropylamid) in das entsprechende Äthinylid überführt und mit Alkylbromid oder -jodid alkyliert.

Die Verbindungen der Formel XXXVIII können durch Wanderung der Doppelbindungen im Dihydropyridazin-Ring zu tautomeren Verbindungen umlagern. Derartige Umlagerungen können z.B. durch Anwesenheit einer Spur Säure oder Base ausgelöst werden. Da die tautomeren Dihydropyridazine jedoch ebenfalls unter den obigen Bedingungen zu Verbindungen der Formel XXV oxidiert werden können, kann gemäss Verfahrensvariante a) sowohl eine Verbindung der Formel XXXVIII, als auch ein tautomeres Dihydropyridazin oder ein Gemisch solcher Verbindungen umgesetzt werden.

Die Ausgangsmaterialien der Formeln XXXVIII und XXXIX sind neu. Sie können anhand der folgenden Reaktionsschemata 3–6 hergestellt werden, worin $R^9$, $R^{17}$ und $X^9$ die obigen Bedeutungen haben und $R^{18}$ eine geradkettige Alkyl- oder Alkoxygruppe mit 1 bis 10 Kohlenstoffatomen darstellt.

Schema 3

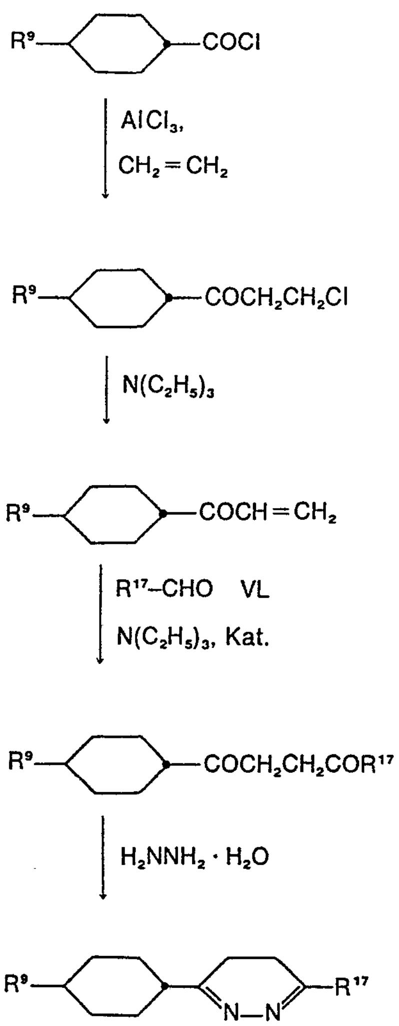


XVLII

XLIII

XXXXIV

VLI

XXXVIII

Schema 4

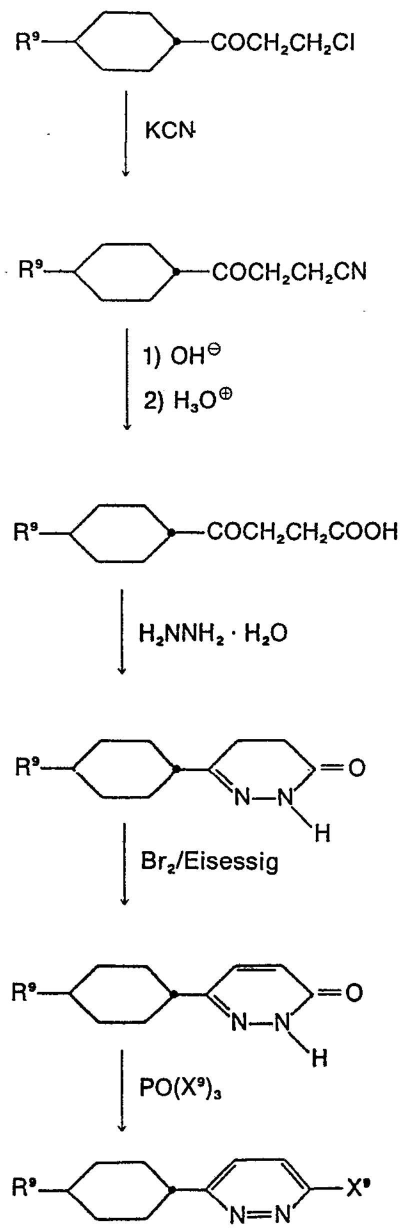


XLIII

VLII

VLIII

IL

L

XXXIX

Schema 5

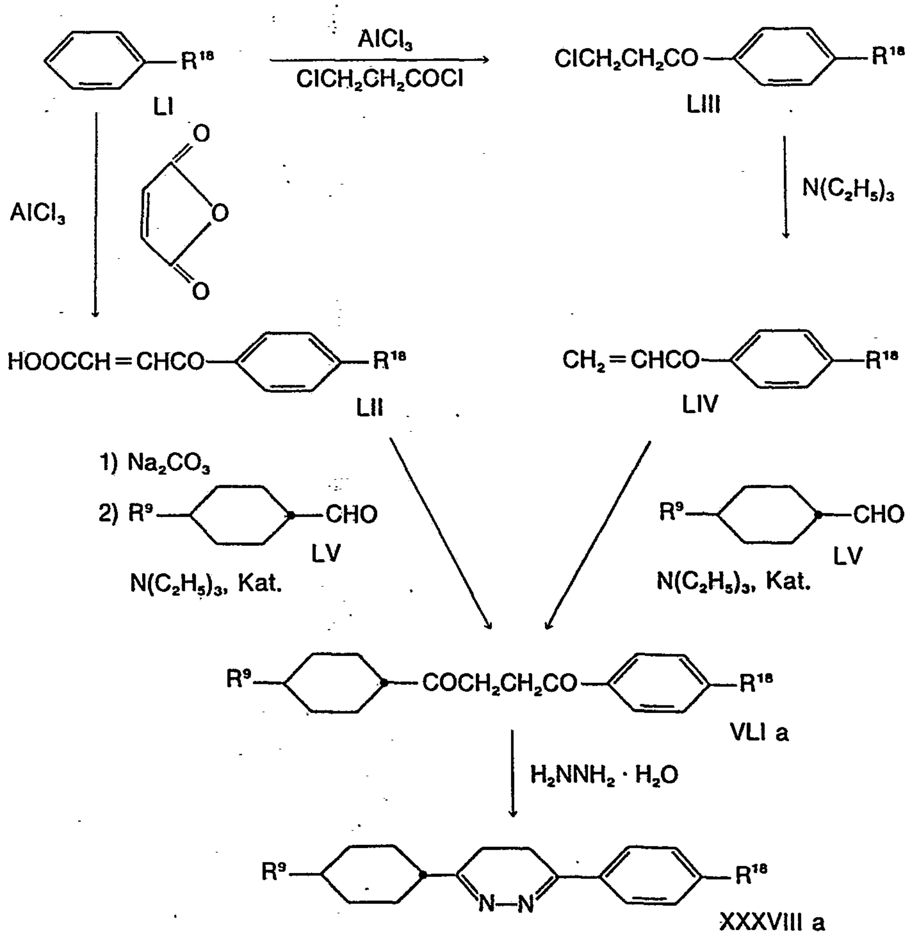


Die Ausgangssubstanzen der Formeln XLII, VL, LI, LV und LVI sind bekannte oder Analoge bekannter Verbindungen und können in bekannter Weise hergestellt werden. Beispielsweise können die Aldehyde der Formel LV durch Rosenmund-Reduktion der Säurechloride der Formel XLII hergestellt werden.

Die Addition eines Aldehydes an eine Verbindung der Formel XXXXIV, LII oder LIV kann nach der Methode von Stetter (Chem. Ber. 114 (1981) 581) in Gegenwart eines 1,3-Thiazoliumsalz-Katalysators durchgeführt werden. Bevorzugter Katalysator für die Addition eines Aldehydes der Formel LV bzw. eines Aldehyds der Formel VL, worin $R^{17}$ Alkyl oder trans-4-Alkylcyclohexyl bedeutet, ist

3-Benzyl-5-(2-hydroxyäthyl)-4-methyl-1,3-thiazoliumchlorid

und für die Addition eines Aldehyds der Formel VL, worin $R^{17}$ p-Alkylphenyl oder p-Alkoxyphenyl bedeutet, 3,4-Dimethyl-5-(2-hydroxyäthyl)-1,3-thiazoliumjodid.

Die Kopplung einer Verbindung der Formel LVIII mit einer Verbindung der Formel XLII kann nach der von T. Sato et al. in Bull. Chem. Soc. Japan 54 (1981) 505 beschriebenen Methode erfolgen.

Die Verbindungen der Formel XL sind ebenfalls neu. Sie können in an sich bekannter Weise dadurch erhalten werden, dass man eine Verbindung der Formel XXXIX in Gegenwart von Triäthylamin, Bis-(triphenylphosphin)-palladium-(II)-dichlorid und Kupfer-(I)-jodid mit Äthinyltrialkylsilan umsetzt.

Die Verbindungen der Formel XXVIII sind ebenfalls neu. Sie können in an sich bekannter Weise dadurch hergestellt werden, dass man

a) zur Herstellung der Verbindungen der Formel XXVIII, worin $R^{12}$ geradkettiges $C_1$–$C_{12}$-Alkyl oder eine Gruppe der Formel XXIX bedeutet, eine Verbindung der allgemeinen Formel

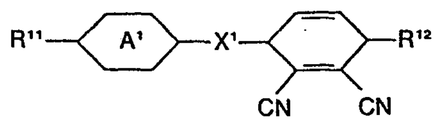 LX

worin $R^{12}$ geradkettiges $C_1$–$C_{12}$-Alkyl oder eine Gruppe der Formel XXIX darstellt und $R^{11}$, $X^1$ und Ring $A^1$ die in Formel XXVIII gegebenen Bedeutungen haben,

oxidiert (z.B. mit 2,3-Dichloro-5,6-dicyano-p-benzochinon in Dioxan), oder

b) zur Herstellung der Verbindungen der Formel XXVIII, worin $R^{12}$ geradkettiges $C_1$–$C_{12}$-Alkoxy bedeutet, eine Verbindung der allgemeinen Formel

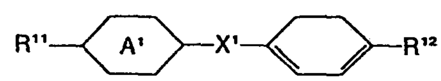 LXI

Schema 6

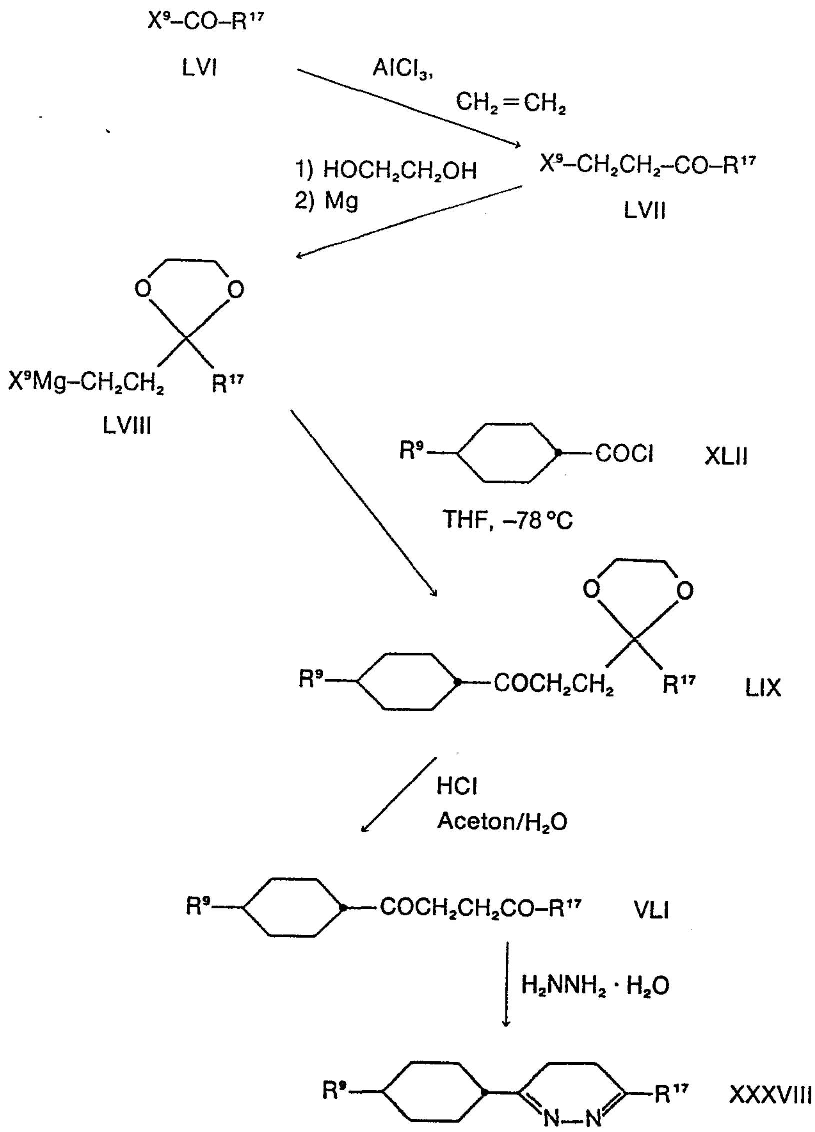


LVI

LVII

LVIII

XLII

LIX

VLI

XXXVIII

worin $R^{12}$ geradkettiges $C_1$–$C_{12}$-Alkoxy darstellt und $R^{11}$, $X^1$ und Ring $A^1$ die in Formel XXXVIII gegebenen Bedeutungen haben, in einem Äther (z.B. Tetrahydrofuran) mit Dicyanoacetylen umsetzt und anschliessend durch Erhitzen Äthylen abspaltet.

Die Verbindungen der Formel LX können beispielsweise dadurch hergestellt werden, dass man einen Aldehyd der allgemeinen Formel

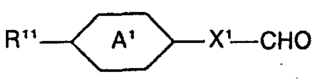 LXII

mit einem Phosphoniumsalz der allgemeinen Formel

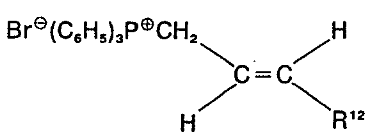 LXIII

worin $R^{11}$, $R^{12}$, $X^1$ und Ring $A^1$ die in Formel LX gegebenen Bedeutungen haben, in Diäthyläther in Gegenwart von Butyllithium umsetzt und das erhaltene Dien durch Diels-Alder-Reaktion mit Dicyanoacetylen in Tetrahydrofuran in eine Verbindung der Formel LX überführt.

Die Verbindungen der Formel LXI können beispielsweise dadurch erhalten werden, dass man eine Verbindung der allgemeinen Formel

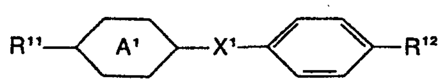 LXIV

worin $R^{11}$, $R^{12}$, $X^1$ und Ring $A^1$ die in Formel LXI gegebenen Bedeutungen haben, mit Lithium und flüssigem Ammoniak (vorzugsweise in einem Diäthyläther/Äthanol-Gemisch) reduziert. Hierbei wird im allgemeinen das 1,4-Dien oder ein Gemisch des 1,3-Diens (Verbindung der Formel LXI) und des 1,4-Diens erhalten. Die Isomerisierung zum 1,3-Dien kann beispielsweise mit 2,3-Dichlormaleinsäureanhydrid erfolgen.

Die Verbindungen der Formel XXX sind ebenfalls neu. Sie können in an sich bekannter Weise dadurch hergestellt werden, dass das Säurechlorid einer Verbindung der allgemeinen Formel

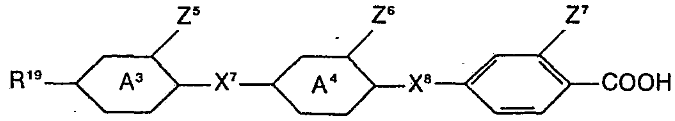

LXV

worin $R^{19}$, $A^3$, $A^4$, $X^7$, $X^8$, $Z^5$, $Z^6$ und $Z^7$ die in Formel XXX gegebenen Bedeutungen haben, mit einem Phenol der allgemeinen Formel

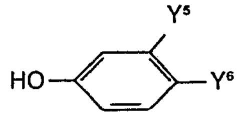

LXVI

worin $Y^5$ und $Y^6$ die in Formel XXX gegebenen Bedeutungen haben, verestert und, gewünschtenfalls, eine erhaltene Verbindung der Formel XXX, worin $Z^5$, $Z^6$ oder $Z^7$ Brom bedeutet, mit Kupfer-(I)-, Natrium- oder Kaliumcyanid umsetzt.

Die Verbindungen der Formel LXVI, worin $Y^6$ 2,2-Dicyanovinyl bedeutet, können beispielsweise dadurch hergestellt werden, dass man 3–$Y^5$-Anisol durch Vilsmeier-Reaktion mit Dimethylformamid in Gegenwart von Phosphoroxychlorid zu 4-Methoxy-2–$Y^5$-benzaldehyd umsetzt, dann die Methoxygruppe hydrolysiert (z. B. durch Erhitzen unter Rückfluss mit Pyridiniumchlorid und anschliessende fraktionierte Destillation) und schliesslich den erhaltenen 4-Hydroxy-2–$Y^5$-benzaldehyd durch Knoevenagel-Kondensation mit Malonitril (z. B. in Gegenwart katalytischer Mengen Eisessig und Natriumacetat in siedendem Toluol) in die Verbindung der Formel LXVI, worin $Y^6$ 2,2-Dicyanovinyl bedeutet überführt. Die übrigen Verbindungen der Formel LXVI sind bekannte oder Analoge bekannter Verbindungen.

Die Verbindungen der Formel LXV sind ebenfalls bekannte oder Analoge bekannter Verbindungen und können nach bekannten Methoden hergestellt werden.

Die Verbindungen der Formel LXV, worin $X^8$ die Estergruppe –COO– bezeichnet können beispielsweise dadurch hergestellt werden, dass man eine Verbindung der allgemeinen Formel

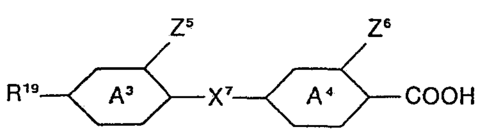

LXVII

worin $X^7$ eine einfache Kovalenzbindung, die Estergruppe –COO–, die Äthylengruppe $-CH_2CH_2-$ oder 1,4-Phenylen bezeichnet und $R^{19}$, $A^3$, $A^4$, $Z^5$ und $Z^6$ die in Formel XXX gegebenen Bedeutungen haben, in Methylenchlorid in Gegenwart von Dicyclohexylcarbodiimid und 4-(Dimethylamino)pyridin mit 4-Hydroxy-2–$Z^7$-benzaldehyd verestert und den erhaltenen Aldehyd durch Jones-Oxidation mit Chromsäure und Schwefelsäure in die entsprechende Säure der Formel LXV überführt.

Bei der Herstellung der Säuren der Formel LXV, worin $X^7$ die Äthylengruppe $-CH_2CH_2-$ und $X^8$ eine einfache Kovalenzbindung bedeuten, und der Säuren der Formel LXVII, worin $X^7$ die Äthylengruppe $-CH_2CH_2-$ bedeutet, erfolgt die Verknüpfung der Ringe $A^3$ und $A^4$ zweckmässig durch Fouquet-Schlosser-Reaktion oder durch Wittig-Reaktion. Beispielsweise kann
4-(Brommethyl)-2–$Z^6$-benzonitril,
4'-(Brommethyl)-4-biphenylcarbonitril oder
trans-4-(Tosyloxymethyl)cyclohexancarbonitril
in Gegenwart von Dilithiumtetrachlorkuprat mit
(4–$R^{19}$–2–$Z^5$-Phenyl)methylmagnesiumbromid
bzw.
(trans-4–$R^{19}$-Cyclohexyl)methylmagnesiumbromid
umgesetzt und das erhaltene Nitril zur gewünschten Säure hydrolysiert werden. Ferner kann beispielsweise
4–$R^{19}$–2–$Z^5$-Benzaldehyd oder
trans-4–$R^{19}$-Cyclohexancarboxaldehyd
in Gegenwart einer Base (z. B. Natriummethylat) mit
(4-Methoxycarbonyl-3–$Z^6$-phenyl)methyl-triphenylphosphoniumbromid
(wobei $Z^5$ und $Z^6$ Wasserstoff, Fluor, Cyano oder Methyl bedeuten) umgesetzt, dann die Doppelbindung katalytisch hydriert und schliesslich die Estergruppe verseift werden.

Die für diese Reaktionen benötigten Ausgangsmaterialien sind bekannt oder können nach an sich bekannten Methoden hergestellt werden. Beispielsweise kann 4-Alkoxy-2–$Z^5$-acetophenon durch Haloformabbau zu 4-Alkoxy-2–$Z^5$-benzoesäure umgesetzt und diese durch Reduktion mit Lithiumaluminiumhydrid und Bromierung (z. B. mit Tetrabrommethan und Triphenylphosphin) in 4-Alkoxy-1-(brommethyl)-2–$Z^5$-benzol übergeführt werden. Aus 2,4-Dimethylbenzoesäuremethylester kann beispielsweise durch Umsetzung mit N-Bromsuccinimid und anschliessende Isomerentrennung 4-(Brommethyl)-2-methylbenzoesäuremethylester erhalten werden, welcher in analoger Weise zu Org. Synth. Coll. V, 825 zu 4-Formyl-2-methylbenzoesäure-methylester umgesetzt werden kann; der nach Umsetzung mit Alkyl-triphenylphosphoniumbromid und Base und anschliessender katalytischer Hydrierung der Doppelbindung erhaltene 4-Alkyl-2-methylbenzoesäuremethylester kann dann mit Natronlauge zur Säure verseift oder mit Lithiumaluminiumhydrid zum Alkohol reduziert werden, welcher schliesslich mit Bromwasserstoff zu 4-Alkyl-1-(brommethyl)-2-methylbenzol oder mit Braunstein zum 4-Alkyl-2-methylbenzaldehyd weiter umgesetzt werden

kann. 1-Alkyl-3-fluorbenzol kann beispielsweise durch Umsetzung mit Butyllithium und Kohlendioxid und anschliessende Hydrolyse in 4-Alkyl-2-fluorbenzoesäure übergeführt werden und 1-Alkyl-3-chlorbenzol bzw.
1-Alkyl-3-brombenzol kann durch Friedel-Crafts-Acylierung mit Acetylchlorid in Gegenwart von Aluminiumtrichlorid und anschliessende Oxidation mit Natriumhypobromit in 4-Alkyl-2-(chlor oder brom)benzoesäure übergeführt werden; die erhaltenen Säuren können dann mit Lithiumaluminiumhydrid zum Alkohol und dieser mit Bromwasserstoff zum Bromid oder mit Braunstein zum Aldehyd weiter umgesetzt werden. Ferner kann beispielsweise 4-Methyl-2-$Z^5$-benzoesäure der Reihe nach mit Thionylchlorid, Ammoniak und Benzolsulfonylchlorid umgesetzt und das erhaltene 4-Methyl-2-$Z^5$-benzonitril mit N-Bromsuccinimid zu 4-(Brommethyl)-2-$Z^5$-benzonitril weiter umgesetzt werden.

Die Verbindungen der Formel XXXI sind zum Teil ebenfalls neue Verbindungen. Sie können in analoger Weise zu den Verbindungen der Formel XXX durch Veresterung hergestellt werden. Die hierbei benötigten Säuren können anhand des Reaktionsschemas 7 erhalten werden, worin $R^{20}$, $R^{21}$ und E die in obiger Formel XXXI gegebenen Bedeutungen haben:

Schema 7

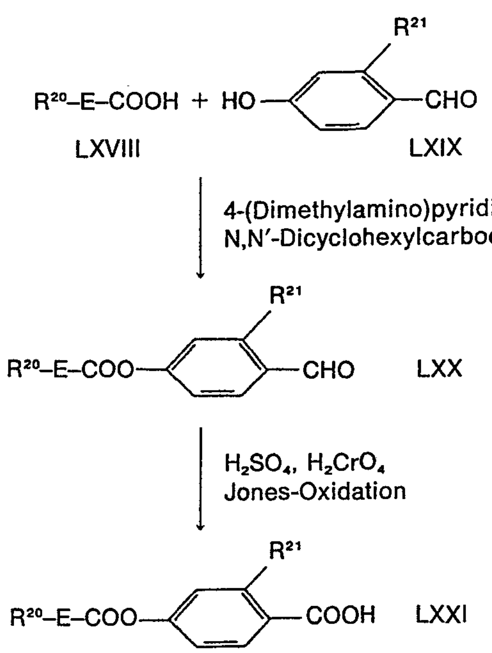


LXVIII LXIX LXX LXXI

Die Verbindungen der Formeln LXVIII und LXIX sind bekannt oder können nach an sich bekannten Methoden hergestellt werden.

Die Ester der Formel XXXVI sind neu. Sie können nach an sich bekannten Veresterungsmethoden (z.B. in analoger Weise zur Herstellung der Verbindungen der Formel XXX) erhalten werden. Die hierbei benötigten Ausgangsmaterialien sind bekannte oder Analoge bekannter Verbindungen und können nach bekannten Methoden hergestellt werden.

Die folgenden Mischungen sind Beispiele bevorzugter Wirt-Phasen und erfindungsgemässer farbiger Mischungen. Mischungen A1–A6 sind Wirt-Phasen mit positiver dielektrischer Anisotropie, Mischung B1 ist eine Wirt-Phase mit negativer dielektrischer Anisotropie, Mischungen C1–C4 sind Wirt-Phasen, die sich für Zwei-Frequenz-Matrix-Adressierung eignen, und Mischungen D1–D25 sind Beispiele entsprechender farbiger Mischungen. Zu den Mischungen D1–D5 werden als Vergleich die entsprechenden Ordnungsgrade in der Wirt-Phase Ro-TN-605 von F. Hoffmann-La Roche angegeben. Diese Mischung besitzt eine positive dielektrische Anisotropie und ergibt für gelöste dichroitische Farbstoffe bekanntlich sehr hohe Ordnungsgrade (Mol. Cryst. Liq. Cryst. 65 (1981) 241–264). $f_c$ bedeutet die Cross-over-Frequenz, $\Delta\varepsilon$ bzw. $\Delta\varepsilon_1$ die niederfrequente («statistische») dielektrische Anisotropie (gemessen bei Frequenzen, die deutlich unterhalb der Cross-over-Frequenz liegen), $\Delta\varepsilon_h$ die hochfrequente dielektrische Anisotropie (gemessen bei Frequenzen, die deutlich oberhalb der Cross-over-Frequenz liegen), $\eta$ die Viskosität (bulk viscosity) und S den Ordnungsgrad (bei 22 °C). $\Delta n$ bezeichnet die optische Anisotropie und $V_0$ die Schwellenspannung in einem Guest-Host-Display mit homogener Wandorientierung, $k_{11}$ (splay) und $k_{33}$ (bend) sind elastische Konstanten, $E_x$ ist die molare isotrope Extinktion des Farbstoffes bei x nm (gemessen in Chloroform, sofern nichts anderes angegeben ist) und $\lambda_{max}$ ist die Wellenlänge mit maximaler Extinktion. Sofern nicht ausdrücklich etwas anderes angegeben ist, wurden alle Daten bei 22 °C gemessen.

Mischung A1
3,89 Gew.-% 4'-Propyl-4-cyanobiphenyl,
19,00 Gew.-% 4'-Pentyl-4-cyanobiphenyl,
5,72 Gew.-% 4''-Pentyl-4-cyano-p-terphenyl,
5,83 Gew.-% 4'-(trans-4-Pentylcyclohexyl)-4-cyanobiphenyl,
16,08 Gew.-% 2-(trans-4-Propylcyclohexyl)-1-(p-äthoxyphenyl)äthan,
22,16 Gew.-% 2-(trans-4-Pentylcyclohexyl)-1-(p-äthoxyphenyl)äthan,
12,79 Gew.-% 1-[2-(trans-4-Butylcyclohexyl)-äthyl]-4-(trans-4-pentylcyclohexyl)benzol,
8,55 Gew.-% 4-[2-(trans-4-Butylcyclohexyl)-äthyl]-4'-(trans-4-pentylcyclohexyl)-1,1'-äthylen-dibenzol,
5,98 Gew.-% 4-(trans-4-Pentylcyclohexyl)-4'-[2-(trans-4-butylcyclohexyl)-äthyl]biphenyl;

Smp. $< -30$ °C, Klp. 91,2 °C, nematisch; $\eta$ = 24,8 mPa·s (24,8 cP); $\Delta\varepsilon$ = 6,19; $\Delta n$ = 0,142; $k_{33}/K_{11}$ = 1,17; $V_o$ = 1,83 V.

Mischung A2
3,70 Gew.-% 4'-Propyl-4-cyanobiphenyl,
18,09 Gew.-% 4'-Pentyl-4-cyanobiphenyl,
5,45 Gew.-% 4''-Pentyl-4-cyano-p-terphenyl,
5,55 Gew.-% 4'-(trans-4-Pentylcyclohexyl)-4-cyanobiphenyl,

4,77 Gew.-% 1-Propyl-4-(trans-4-pentylcyclohexyl)benzol,
15,32 Gew.-% 2-(trans-4-Propylcyclohexyl)-1-(p-äthoxyphenyl)äthan,
21,10 Gew.-% 2-(trans-4-Pentylcyclohexyl)-1-(p-äthoxyphenyl)äthan,
12,18 Gew.-% 1-[2-(trans-4-Butylcyclohexyl)-äthyl]-4-(trans-4-pentylcyclohexyl)benzol,
8,14 Gew.-% 4-[2-(trans-4-Butylcyclohexyl)-äthyl]-4'-(trans-4-pentylcyclohexyl)-1,1'-äthylendibenzol,
5,70 Gew.-% 4-(trans-4-Pentylcyclohexyl)-4'-[2-(trans-4-butylcyclohexyl)-äthyl]biphenyl;

Smp. < −30 °C, Klp. 88,2 °C, nematisch; η = 21,0 mPa · s (21,0 cP); Δε = 5,84; Δn = 0,140; $k_{33}/k_{11}$ = 1,05; $V_o$ = 1,87 V.

Mischung A3
3,23 Gew.-% 4'-Propyl-4-cyanobiphenyl,
16,75 Gew.-% 4'-Pentyl-4-cyanobiphenyl,
4,75 Gew.-% 4''-Pentyl-4-cyano-p-terphenyl,
4,84 Gew.-% 4'-(trans-4-Pentylcyclohexyl)-4-cyanobiphenyl,
16,03 Gew.-% 2-(trans-4-Propylcyclohexyl)-1-(p-äthoxyphenyl)äthan,
9,72 Gew.-% 2-(trans-4-Propylcyclohexyl)-1-(p-butyloxyphenyl)äthan,
18,56 Gew.-% 2-(trans-4-Pentylcyclohexyl)-1-(p-äthoxyphenyl)äthan,
11,59 Gew.-% 1-[2-(trans-4-Butylcyclohexyl)-äthyl]-4-(trans-4-pentylcyclohexyl)benzol,
8,55 Gew.-% 4-[2-(trans-4-Butylcyclohexyl)-äthyl]-4'-(trans-4-pentylcyclohexyl)-1,1'-äthylen-dibenzol,
5,98 Gew.-% 4-(trans-4-Pentylcyclohexyl)-4'-[2-(trans-4-butylcyclohexyl)-äthyl]biphenyl;

Smp. < −30 °C, Klp. 85,7 °C, nematisch; η = 21,5 mPa · s (21,5 cP); Δε = 5,40; Δn = 0,133; $k_{33}/k_{11}$ = 1,07; $V_o$ = 1,91 V.

Mischung A4
4,36 Gew.-% 4'-Äthyl-4-cyanobiphenyl,
3,33 Gew.-% 4'-Propyl-4-cyanobiphenyl,
16,49 Gew.-% 4'-Pentyl-4-cyanobiphenyl,
4,90 Gew.-% 4''-Pentyl-4-cyano-p-terphenyl,
4,98 Gew.-% 4'-(trans-4-Pentylcyclohexyl)-4-cyanobiphenyl,
15,67 Gew.-% 2-(trans-4-Propylcyclohexyl)-1-(p-äthoxyphenyl)äthan,
6,36 Gew.-% 2-(trans-4-Propylcyclohexyl)-1-(p-butyloxyphenyl)äthan,
18,19 Gew.-% 2-(trans-4-Pentylcyclohexyl)-1-(p-äthoxyphenyl)äthan,
11,92 Gew.-% 1-[2-(trans-4-Butylcyclohexyl)-äthyl]-4-(trans-4-pentylcyclohexyl)benzol,
6,90 Gew.-% 4-[2-(trans-4-Butylcyclohexyl)-äthyl]-4'-(trans-4-pentylcyclohexyl)-1,1'-äthylendibenzol,
6,90 Gew.-% 4-(trans-4-Pentylcyclohexyl)-4'-[2-(trans-4-butylcyclohexyl)-äthyl]-biphenyl;

Smp. < −30 °C, Klp. 87,0 °C, nematisch; η = 24,0 mPa · s (24,0 cP); Δε = 6,10; Δn = 0,143; $k_{33}/k_{11}$ = 1,10; $V_o$ = 1,74 V.

Mischung A5
5,36 Gew.-% 4'-Äthyl-4-cyanobiphenyl,
3,18 Gew.-% 4'-Propyl-4-cyanobiphenyl,
6,08 Gew.-% 4'-Butyl-4-cyanobiphenyl,
6,53 Gew.-% p-(trans-4-Propylcyclohexyl)-benzonitril,
14,67 Gew.-% p-(trans-4-Pentylcyclohexyl)-benzonitril,
5,60 Gew.-% 4''-Pentyl-4-cyano-p-terphenyl,
5,71 Gew.-% 4'-(trans-4-Pentylcyclohexyl)-4-cyanobiphenyl,
2,84 Gew.-% trans-4-[2-(trans-4-Propylcyclohexyl)äthyl]-cyclohexancarbonsäure-p-cyanophenylester,
5,21 Gew.-% 4-Äthyl-1-(trans-4-propylcyclohexyl)benzol,
16,54 Gew.-% 2-(trans-4-Propylcyclohexyl)-1-(p-äthoxyphenyl)äthan,
15,95 Gew.-% 1-[2-(trans-4-Butylcyclohexyl)-äthyl]-4-(trans-4-pentylcyclohexyl)benzol,
7,59 Gew.-% 4-[2-(trans-4-Butylcyclohexyl)-äthyl]-4'-(trans-4-pentylcyclohexyl)-1,1'-äthylendibenzol,
4,74 Gew.-% 4-(trans-4-Pentylcyclohexyl)-4'-[2-(trans-4-butylcyclohexyl)-äthyl]biphenyl;

Smp. < −30 °C, Klp. 90 °C, nematisch; η (22 °C) = 22 mPa · s (22 cP), η (−20 °C) = 365 mPa · s (365 cP); Δε = 8,54; Δn = 0,139; $k_{33}/k_{11}$ = 1,39.

Mischung A6
5,33 Gew.-% 4'-Äthyl-4-cyanobiphenyl,
3,55 Gew.-% 4'-Propyl-4-cyanobiphenyl,
6,05 Gew.-% 4'-Butyl-4-cyanobiphenyl,
16,40 Gew.-% p-(trans-4-Pentylcyclohexyl)-benzonitril,
10,55 Gew.-% 4''-Pentyl-4-cyano-p-terphenyl,
8,80 Gew.-% trans-4-Butylcyclohexancarbonsäure-p-äthoxyphenylester,
7,82 Gew.-% trans-4-Pentylcyclohexancarbonsäure-p-methoxyphenylester,
5,00 Gew.-% 4-Äthoxy-1-(trans-4-propylcyclohexyl)benzol,
23,31 Gew.-% 2-(trans-4-Pentylcyclohexyl)-1-(p-äthoxyphenyl)äthan,
10,19 Gew.-% 1-[2-(trans-4-Butylcyclohexyl)-äthyl]-4-(trans-4-pentylcyclohexyl)benzol,
3,00 Gew.-% 4-[2-(trans-4-Butylcyclohexyl)-äthyl]-4'-(trans-4-pentylcyclohexyl)-1,1'-äthylendibenzol;

Smp. < −30 °C, Klp. 72 °C, nematisch; η (22 °C) = 21 mPa · s (21 cP), η (−20 °C) = 341 mPa · s (341 cP); Δε = 7,25; Δn = 0,126; $k_{33}/k_{11}$ = 1,30.

Mischung B1

3,38 Gew.-% 3-Propyl-6-(trans-4-äthylcyclohexyl)pyridazin,
8,21 Gew.-% 3-Propyl-6-(trans-4-pentylcyclohexyl)pyridazin,
10,51 Gew.-% 3-Pentyl-6-(trans-4-pentylcyclohexyl)pyridazin,
5,25 Gew.-% 3-Propyl-6-(trans-4-heptylcyclohexyl)pyridazin,
4,27 Gew.-% 2,3-Dicyano-1-[2-(trans-4-pentylcyclohexyl)-äthyl]-4-propylbenzol,
11,58 Gew.-% trans-4-Butylcyclohexancarbonsäure-p-äthoxyphenylester,
16,31 Gew.-% trans-4-Butylcyclohexancarbonsäure-p-pentyloxyphenylester,
10,47 Gew.-% trans-4-Pentylcyclohexancarbonsäure-p-methoxyphenylester,
12,64 Gew.-% trans-4-Pentylcyclohexancarbonsäure-p-propyloxyphenylester,
7,12 Gew.-% 2-(trans-4-Pentylcyclohexyl)-1-(p-äthoxyphenyl)äthan,
10,26 Gew.-% 4-(trans-4-Pentylcyclohexyl)-4'-[2-(trans-4-butylcyclohexyl)-äthyl]-biphenyl;

Smp. $< -10\,°C$, Klp. 61,5 °C, nematisch; $\Delta\varepsilon = -5{,}05$; $\eta = 42{,}8$ mPa · s (42,8 cP).

Mischung C1

3,76 Gew.-% 3-Propyl-6-(trans-4-äthylcyclohexyl)pyridazin,
9,15 Gew.-% 3-Propyl-6-(trans-4-pentylcyclohexyl)pyridazin,
11,71 Gew.-% 3-Pentyl-6-(trans-4-pentylcyclohexyl)pyridazin,
5,86 Gew.-% 3-Propyl-6-(trans-4-heptylcyclohexyl)pyridazin,
5,71 Gew.-% 4'-Hexyl-4-biphenylcarbonsäure-3-chlor-4-[(3-chlor-4-cyanophenoxy)carbonyl]phenylester,
5,71 Gew.-% 4'-Heptyl-4-biphenylcarbonsäure-3-chlor-4-[(3-chlor-4-cyanophenoxy)carbonyl]phenylester,
5,71 Gew.-% 4'-Hexyl-4-biphenylcarbonsäure-3-chlor-4-[(3-chlor-4-nitrophenoxy)carbonyl]phenylester,
9,49 Gew.-% trans-4-Butylcyclohexancarbonsäure-p-äthoxyphenylester,
13,36 Gew.-% trans-4-Butylcyclohexancarbonsäure-p-pentyloxyphenylester,
8,58 Gew.-% trans-4-Pentylcyclohexancarbonsäure-p-methoxyphenylester,
10,36 Gew.-% trans-4-Pentylcyclohexancarbonsäure-p-propyloxyphenylester,
5,83 Gew.-% 2-(trans-4-Pentylcyclohexyl)-1-(p-äthoxyphenyl)äthan,
4,77 Gew.-% 4-(trans-4-Pentylcyclohexyl)-4'-[2-(trans-4-butylcyclohexyl)-äthyl]biphenyl;

Smp. $< -10\,°C$, Klp. 73,7 °C, nematisch; $f_c$ (22 °C) = 3,5 kHz, $\Delta\varepsilon_1$ (22 °C) = 5,22, $\Delta\varepsilon_h$ (22 °C) = $-5{,}2$; $\eta$ (22 °C) = 67,4 mPa · s (67,4 cP).

Mischung C2

3,76 Gew.-% 3-Propyl-6-(trans-4-äthylcyclohexyl)pyridazin,
9,15 Gew.-% 3-Propyl-6-(trans-4-pentylcyclohexyl)pyridazin,
11,72 Gew.-% 3-Pentyl-6-(trans-4-pentylcyclohexyl)pyridazin,
5,85 Gew.-% 3-Propyl-6-(trans-4-heptylcyclohexyl)pyridazin,
5,71 Gew.-% 4'-Hexyl-4-biphenylcarbonsäure-3-chlor-4-[(3-chlor-4-cyanophenoxy)carbonyl]phenylester,
5,71 Gew.-% 4'-Hexyl-4-biphenylcarbonsäure-3-chlor-4-[(3-chlor-4-nitrophenoxy)carbonyl]phenylester,
5,71 Gew.-% 4'-Heptyl-4-biphenylcarbonsäure-3-chlor-4-[(3-chlor-4-nitrophenoxy)carbonyl]phenylester,
5,40 Gew.-% trans-4-Butylcyclohexancarbonsäure-p-äthoxyphenylester,
4,95 Gew.-% trans-4-Pentylcyclohexancarbonsäure-p-methoxyphenylester,
8,35 Gew.-% trans-4-Pentylcyclohexancarbonsäure-p-propyloxyphenylester,
9,06 Gew.-% trans-4-Pentylcyclohexancarbonsäure-trans-4-propylcyclohexylester,
13,42 Gew.-% 2-(trans-4-Pentylcyclohexyl)-1-(p-äthoxyphenyl)äthan,
6,45 Gew.-% 1-[2-(trans-4-Butylcyclohexyl)-äthyl]-4-(trans-4-pentylcyclohexyl)benzol,
4,76 Gew.-% 4-(trans-4-Pentylcyclohexyl)-4'-[2-(trans-4-butylcyclohexyl)-äthyl]biphenyl;

Smp. $< -10\,°C$, Klp. 70,1 °C, nematisch; $f_c$ (22 °C) = 2,5 kHz, $\Delta\varepsilon_1$ (22 °C) = 5,2, $\Delta\varepsilon_h$ (22 °C) = $-5{,}2$; $\eta$ (22 °C) = 65 mPa · s (65 cP).

Mischung C3

0,60 Gew.-% 3-Propyl-6-(trans-4-äthylcyclohexyl)pyridazin,
1,46 Gew.-% 3-Propyl-6-(trans-4-pentylcyclohexyl)pyridazin,
1,86 Gew.-% 3-Pentyl-6-(trans-4-pentylcyclohexyl)pyridazin,
0,93 Gew.-% 3-Propyl-6-(trans-4-heptylcyclohexyl)pyridazin,
5,83 Gew.-% 4'-Hexyl-4-biphenylcarbonsäure-3-chlor-4-[(3-chlor-4-cyanophenoxy)carbonyl]phenylester,
5,83 Gew.-% 4'-Hexyl-4-biphenylcarbonsäure-3-chlor-4-[(3-chlor-4-nitrophenoxy)carbonyl]phenylester,
5,83 Gew.-% 4'-Heptyl-4-biphenylcarbonsäure-3-chlor-4-[(3-chlor-4-nitrophenoxy)carbonyl]phenylester,
8,48 Gew.-% trans-4-Butylcyclohexancarbonsäure-p-äthoxyphenylester,
7,77 Gew.-% trans-4-Pentylcyclohexancarbonsäure-p-methoxyphenylester,
13,11 Gew.-% trans-4-Pentylcyclohexancarbonsäure-p-propyloxyphenylester,
14,22 Gew.-% trans-4-Pentylcyclohexancarbonsäure-trans-4-propylcyclohexylester,
21,05 Gew.-% 2-(trans-4-Pentylcyclohexyl)-1-(p-äthoxyphenyl)äthan,

10,12 Gew.-% 1-[2-(trans-4-Butylcyclohexyl)-äthyl]-4-(trans-4-pentylcyclohexyl)benzol,
2,91 Gew.-% 4-(trans-4-Pentylcyclohexyl)-4'-[2-(trans-4-butylcyclohexyl)-äthyl]biphenyl;

Smp. < −10 °C, Klp. 85,1 °C, nematisch; $f_c$ (22 °C) = 2 kHz, $\Delta\varepsilon_1$ (22 °C) = 5,2, $\Delta\varepsilon_h$ (22 °C) = −2,2; η (22 °C) = 55 mPa · s (55 cP).

Mischung C4
3,66 Gew.-% 3-Propyl-6-(trans-4-äthylcyclohexyl)pyridazin,
8,90 Gew.-% 3-Propyl-6-(trans-4-pentylcyclohexyl)pyridazin,
11,39 Gew.-% 3-Pentyl-6-(trans-4-pentylcyclohexyl)pyridazin,
5,69 Gew.-% 3-Propyl-6-(trans-4-heptylcyclohexyl)pyridazin,
3,70 Gew.-% 4'-Hexyl-4-biphenylcarbonsäure-3-chlor-4-[(3-chlor-4-cyanophenoxy)carbonyl]phenylester,
3,70 Gew.-% 4'-Hexyl-4-biphenylcarbonsäure-3-chlor-4-[(3-chlor-4-nitrophenoxy)carbonyl]phenylester,
3,70 Gew.-% 4'-Heptyl-4-biphenylcarbonsäure-3-chlor-4-[(3-chlor-4-nitrophenoxy)carbonyl]phenylester,
5,88 Gew.-% trans-4-Butylcyclohexancarbonsäure-p-äthoxyphenylester,
5,39 Gew.-% trans-4-Pentylcyclohexancarbonsäure-p-methoxyphenylester,
9,09 Gew.-% trans-4-Pentylcyclohexancarbonsäure-p-propyloxyphenylester,
9,86 Gew.-% trans-4-Pentylcyclohexancarbonsäure-trans-4-propylcyclohexylester,
14,61 Gew.-% 2-(trans-4-Pentylcyclohexyl)-1-(p-äthoxyphenyl)äthan,
7,02 Gew.-% 1-[2-(trans-4-Butylcyclohexyl)-äthyl]-4-(trans-4-pentylcyclohexyl)benzol,
7,41 Gew.-% 4-(trans-4-Pentylcyclohexyl)-4'-[2-(trans-4-butylcyclohexyl)-äthyl]biphenyl;

Smp. < −10 °C, Klp. 70,0 °C, nematisch; $f_c$ (22 °C) = 3 kHz, $\Delta\varepsilon_1$ (22 °C) = 2,2, $\Delta\varepsilon_h$ (22 °C) = −5,2; η (22 °C) = 55 mPa · s (55 cP).

Mischung D1
98 Gew.-% Mischung A3,
2 Gew.-% 4-Nitro-4'-(4-heptyloxyphenyl)-azobenzol;

Smp. < −30 °C, Klp. 88,8 °C, nematisch; gelb, $E_{252}$ (Äthanol) = 15480, $E_{294}$ (Äthanol) = 13830, $E_{390}$ (Äthanol) = 28180; S = 0,820.
S = 0,770 in Wirt-Phase RO-TN-605.

Mischung D2
98 Gew.-% Mischung A3,
2 Gew.-% 2-Chlor-4-nitro-4'-(4-heptyloxyphenyl)azobenzol;

Smp. < −30 °C, Klp. 88 °C, nematisch; gelb, $E_{300}$ = 11580, $E_{406}$ = 25910; S = 0,791.
S = 0,747 in Wirt-Phase RO-TN-605.

Mischung D3
98 Gew.-% Mischung A3,
2 Gew.-% 3-Chlor-4'-[(p-dimethylaminophenyl)azo]-4-heptyloxyazobenzol;

nematisch; rot, $E_{365}$ = 15140, $E_{479}$ = 41330; S = 0,820.
S = 0,770 in Wirt-Phase RO-TN-605.

Mischung D4
98 Gew.-% Mischung A3,
2 Gew.-% 1,5-Diamino-6-methyl-2-anthrachinoncarbonsäure-p-heptylphenylester;

nematisch; rot, $E_{277}$ = 15280, $E_{524}$ = 14700; S = 0,747.
S = 0,735 in Wirt-Phase RO-TN-605.

Mischung D5
98 Gew.-% Mischung A3,
2 Gew.-% 1,4-Diamino-2-anthrachinoncarbonsäure-p-heptylphenylester;

Smp. < −20 °C, Klp. 87,3 °C, nematisch; blau, $E_{602}$ = 12860, $E_{638}$ = 12860; S = 0,777.
S = 0,762 in Wirt-Phase RO-TN-605.

Mischung D6
98 Gew.-% Mischung C1,
2 Gew.-% 1,4-Diamino-2-anthrachinoncarbonsäure-p-heptylphenylester;

Smp. < −10 °C, Klp. 74,3 °C, nematisch; blau, $E_{602}$ = 12860, $E_{638}$ = 12860.

Mischung D7
98 Gew.-% Mischung B1,
2 Gew.-% 1,4-Diamino-2-anthrachinoncarbonsäure-p-heptylphenylester;

Smp. < −10 °C, Klp. 62,2 °C, nematisch; blau, $E_{602}$ = 12860, $E_{638}$ = 12860.

Mischung D8
98,57 Gew.-% Mischung A3,
0,30 Gew.-% 4-Nitro-4'-(4-heptyloxyphenyl)azobenzol,
0,83 Gew.-% 1,5-Diamino-6-methyl-2-anthrachinoncarbonsäure-p-heptylphenylester,
0,30 Gew.-% 3-Chlor-4'-[(p-dimethylaminophenyl)-azo]-4-heptyloxyazobenzol;

Smp. < −30 °C, Klp. 87 °C, nematisch; rot.

Mischung D9
98,57 Gew.-% Mischung B1,
0,30 Gew.-% 4-Nitro-4'-(4-heptyloxyphenyl)-azobenzol,
0,83 Gew.-% 1,5-Diamino-6-methyl-2-anthrachinoncarbonsäure-p-heptylphenylester,
0,30 Gew.-% 3-Chlor-4'-[(p-dimethylaminophenyl)azo]-4-heptyloxyazobenzol;

Smp. < −10 °C, Klp. 63 °C, nematisch; rot.

Mischung D10
98,57 Gew.-% Mischung C1,
0,30 Gew.-% 4-Nitro-4'-(4-heptyloxyphenyl)-azobenzol,

0,83 Gew.-% 1,5-Diamino-6-methyl-2-anthrachinoncarbonsäure-p-heptylphenylester,
0,30 Gew.-% 3-Chlor-4'-[(p-dimethylaminophenyl)azo]-4-heptyloxyazobenzol;
Smp. < −10 °C, Klp. 76 °C, nematisch; rot.

Mischung D11
95,10 Gew.-% Mischung A3,
0,76 Gew.-% 4-Nitro-4'-(4-heptyloxyphenyl)-azobenzol,
0,53 Gew.-% 3-Chlor-4'-[(p-dimethylaminophenyl)azo]-4-heptyloxyazobenzol,
0,76 Gew.-% 1,5-Diamino-6-methyl-2-anthrachinoncarbonsäure-p-heptylphenylester,
2,85 Gew.-% 1,4-Diamino-2-anthrachinoncarbonsäure-p-heptylphenylester;
Smp. < −20 °C, Klp. 87 °C, nematisch; schwarz.

Mischung D12
94,44 Gew.-% Mischung A3,
0,89 Gew.-% 4-Nitro-4'-(4-heptyloxyphenyl)-azobenzol,
0,60 Gew.-% 3-Chlor-4'-[(p-dimethylaminophenyl)azo]-4-heptyloxyazobenzol,
0,68 Gew.-% 1,5-Diamino-6-methyl-2-anthrachinoncarbonsäure-p-heptylphenylester,
3,39 Gew.-% 1,4-Diamino-2-anthrachinoncarbonsäure-p-heptylphenylester;
Smp. < −20 °C, Klp. 90,5 °C, nematisch; schwarz

Mischung D13
94,41 Gew.-% Mischung A3,
0,45 Gew.-% 4-Nitro-4'-(4-heptyloxyphenyl)-azobenzol,
0,45 Gew.-% 2-Chlor-4-nitro-4'-(4-heptyloxyphenyl)azobenzol,
0,70 Gew.-% 3-Chlor-4'-[(p-dimethylaminophenyl)azo]-4-heptyloxyazobenzol,
0,61 Gew.-% 1,5-Diamino-6-methyl-2-anthrachinoncarbonsäure-p-heptylphenylester,
3,38 Gew.-% 1,4-Diamino-2-anthrachinoncarbonsäure-p-heptylphenylester;
Smp. < −20 °C, Klp. 90 °C, nematisch; schwarz.

Mischung D14
94,44 Gew.-% Mischung B1,
0,89 Gew.-% 4-Nitro-4'-(4-heptyloxyphenyl)-azobenzol,
0,60 Gew.-% 3-Chlor-4'-[(p-dimethylaminophenyl)azo]-4-heptyloxyazobenzol,
0,68 Gew.-% 1,5-Diamino-6-methyl-2-anthrachinoncarbonsäure-p-heptylphenylester,
3,39 Gew.-% 1,4-Diamino-2-anthrachinoncarbonsäure-p-heptylphenylester;
Smp. < −10 °C, Klp. 65,5 °C, nematisch; schwarz.

Mischung D15
94,44 Gew.-% Mischung C1,
0,89 Gew.-% 4-Nitro-4'-(4-heptyloxyphenyl)-azobenzol,
0,60 Gew.-% 3-Chlor-4'-[(p-dimethylaminophenyl)azo]-4-heptyloxyazobenzol,
0,68 Gew.-% 1,5-Diamino-6-methyl-2-anthrachinoncarbonsäure-p-heptylphenylester,
3,39 Gew.-% 1,4-Diamino-2-anthrachinoncarbonsäure-p-heptylphenylester;
Smp. < −10 °C, Klp. 77,5 °C, nematisch; schwarz.

Mischung D16
94,62 Gew.-% Mischung A3,
0,76 Gew.-% 4-Nitro-4'-(4-heptyloxyphenyl)-azobenzol,
0,76 Gew.-% 3-Chlor-4'-[(p-dimethylaminophenyl)azo]-4-heptyloxyazobenzol,
3,86 Gew.-% 1,4-Diamino-2-anthrachinoncarbonsäure-p-heptylphenylester;
Smp. < −20 °C, Klp. 88 °C, nematisch; schwarz.

Mischung D17
96,05 Gew.-% Mischung A6,
0,63 Gew.-% 4-Nitro-4'-(4-heptyloxyphenyl)-azobenzol,
0,52 Gew.-% 3-Chlor-4'-[(p-dimethylaminophenyl)azo]-4-heptyloxyazobenzol,
0,40 Gew.-% 1,5-Diamino-6-formyl-2-(E–p-heptylstyryl)-anthrachinon,
2,40 Gew.-% 1,4-Diamino-2-anthrachinoncarbonsäure-p-heptylphenylester;
Smp. < −30 °C, Klp. 75 °C, nematisch; schwarz, $\lambda_{max}$ = 400–670 nm; S = 0,76–0,79; η (22 °C) = 26 mPa · s (26 cP), η (−20 °C) = 466 mPa · s (466 cP).

Mischung D18
94,07 Gew.-% Mischung A6,
0,95 Gew.-% 4-Nitro-4'-(4-heptyloxyphenyl)-azobenzol,
0,78 Gew.-% 3-Chlor-4'-[(p-dimethylaminophenyl)azo]-4-heptyloxyazobenzol,
0,60 Gew.-% 1,5-Diamino-6-formyl-2-(E–p-heptylstyryl)-anthrachinon,
3,60 Gew.-% 1,4-Diamino-2-anthrachinoncarbonsäure-p-heptylphenylester;
Smp. < −20 °C, Klp. 78 °C, nematisch; schwarz, $\lambda_{max}$ = 400–670 nm; S = 0,76–0,79; η (22 °C) = 29 mPa · s (29 cP), η (−20 °C) = 588 mPa · s (588 cP).

Mischung D19
97,50 Gew.-% Mischung A5,
2,50 Gew.-% 1,4-Diamino-2-anthrachinoncarbonsäure-p-heptylphenylester;
Smp. < −30 °C, Klp. 90 °C, nematisch; blau, $\lambda_{max}$ = 620 nm; S = 0,77; η (22 °C) = 25 mPa · s (25 cP), η (−20 °C) = 474 mPa · s (474 cP).

Mischung D20
96,80 Gew.-% Mischung A6,
3,20 Gew.-% 1,4-Diamino-2-anthrachinoncarbonsäure-p-heptylphenylester;
Smp. < −20 °C, Klp. 76 °C, nematisch; blau, $\lambda_{max}$ = 620 nm; S = 0,77; η (22 °C) = 25 mPa · s (25 cP), η (−20 °C) = 487 mPa · s (487 cP).

Mischung D21
97,00 Gew.-% Mischung A6,
0,20 Gew.-% 3-Chlor-4'-[(p-dimethylaminophenyl)azo]-4-heptyloxyazobenzol,
2,80 Gew.-% 1,4-Diamino-2-anthrachinoncarbonsäure-p-heptylphenylester;
Smp. < −20 °C, Klp. 72 °C, nematisch; dunkelblau, $\lambda_{max}$ = 600 nm; S = 0,78; η (22 °C) = 25 mPa · s (25 cP), η (−20 °C) = 456 mPa · s (456 cP).

Mischung D22
97,00 Gew.-% Mischung A6,
3,00 Gew.-% 4-Nitro-4'-(4-heptyloxyphenyl)-azobenzol;
Smp. < −20 °C, Klp. 77 °C, nematisch; gelb, $\lambda_{max}$ = 400 nm; S = 0,78; η (22 °C) = 22 mPa · s (22 cP), η (−20 °C) = 390 mPa · s (390 cP).

Mischung D23
99,05 Gew.-% Mischung A6,
0,80 Gew.-% 3-Chlor-4'-[(p-dimethylaminophenyl)azo]-4-heptyloxyazobenzol,
0,15 Gew.-% 1,5-Diamino-6-formyl-2-(E-p-heptylstyryl)-anthrachinon;
Smp. < −20 °C, Klp. 74 °C, nematisch; rot, $\lambda_{max}$ = 490 nm; S = 0,79; η (22 °C) = 22 mPa · s (22 cP), η (−20 °C) = 385 mPa · s (385 cP).

Mischung D24
97,00 Gew.-% Mischung A6,
2,00 Gew.-% 4-Nitro-4'-(4-heptyloxyphenyl)-azobenzol,
1,00 Gew.% 1,4-Diamino-2-anthrachinoncarbonsäure-p-heptylphenylester;
Smp. < −20 °C, Klp. 76 °C, nematisch; grün, $\lambda_{max}$ = 400 nm, S = 0,78; η (22 °C) = 23 mPa · s (23 cP), η (−20 °C) = 426 mPa · s (426 cP).

Mischung D25
96,05 Gew.-% Mischung A5,
0,63 Gew.-% 4-Nitro-4'-(4-heptyloxyphenyl)-azobenzol,
0,52 Gew.-% 3-Chlor-4'-[(p-dimethylaminophenyl)azo]-4-heptyloxyazobenzol,
0,40 Gew.-% 1,5-Diamino-6-formyl-2-(E-p-heptylstyryl)-anthrachinon,
2,40 Gew.-% 1,4-Diamino-2-anthrachinoncarbonsäure-p-heptylphenylester;
Smp. < −30 °C, Klp. 91 °C, nematisch; schwarz, $\lambda_{max}$ = 400–670 nm; S = 076–0,79; η (22 °C) = 28 mPa · s (28 cP), η (−20 °C) = 548 mPa · s (548 cP).

Die Herstellung der Verbindungen der Formeln I–IV und IVa wird durch die folgenden Beispiele weiter veranschaulicht. C bedeutet eine kristalline, S eine smektische, N eine nematische und I die isotrope Phase.

Beispiel 1

In einem Sulfierkolben wurden 2,20 g
4-(trans-4-Pentylcyclohexyl)-4'-[2-(trans-4-pentylcyclohexyl)vinyl]biphenyl
in einem Toluol/Äthanol-Gemisch (3:2) suspendiert, mit 200 mg Palladium/Kohle (10%) versetzt und bei Normaldruck und 50 °C bis zum Stillstand der Wasserstoffaufnahme hydriert. Filtration des Reaktionsgemisches und Einengen des Filtrates ergab einen weissen, semikristallinen Rückstand, welcher nach Umkristallisation aus 100 ml Hexan 1,55 g
4-(trans-4-Pentylcyclohexyl)-4'-[2-(trans-4-pentylcyclohexyl)äthyl]biphenyl
als farblose Nadeln lieferte; Umwandlung (vermutlich S–S) 219,5 °C, Umwandlung S–N 243,2 °C, Klp. (N–I) 256,1 °C. Diese Substanz erwies sich als sehr stark unterkühlbar; beim Abkühlen auf Raumtemperatur kristallisierte sie noch nicht. Rf-Wert (Hexan): 0,32.

Das als Ausgangsmaterial verwendete
4-(trans-4-Pentylcyclohexyl)-4'-[2-(trans-4-pentylcyclohexyl)vinyl]biphenyl
wurde wie folgt hergestellt:

a) In einem Sulfierkolben wurde unter Argonbegasung eine Lösung von 10,0 g
4'-(trans-4-Pentylcyclohexyl)-4-biphenylcarbonitril
in 150 ml Methylenchlorid bei −35 °C vorgelegt und innert 8 Minuten mit 40 ml einer ca. 1,5N Lösung von Diisobutylaluminiumhydrid in Toluol versetzt. Nach beendeter Zugabe wurde das Reaktionsgemisch während 2 Stunden bei −35 °C und dann unter allmählichem Erwärmen auf 0 °C noch während 1,5 Stunden gerührt, bevor es vorsichtig mit 100 ml 1N Schwefelsäure versetzt und dreimal mit je 150 ml Diäthyläther extrahiert wurde. Die organischen Phasen wurden noch einmal mit 100 ml 1N Schwefelsäure, zweimal mit je 100 ml Wasser und einmal mit 100 ml gesättigter Kochsalzlösung gewaschen, über Magnesiumsulfat getrocknet und eingeengt. Es wurden 9,5 g (95%)
4'-(trans-4-Pentylcyclohexyl)-4-biphenylcarboxaldehyd
als farblose, kristalline Masse (Smp. 115–116 °C) erhalten, welche ohne weitere Reinigung in der folgenden Stufe verwendet wurde. Rf-Werte (Toluol/Essigester 19:1): Edukt 0,65, Produkt 0,52.

b) In einem Sulfierkolben wurde ein Gemisch von 930 mg Lithiumaluminiumhydrid in 100 ml absolutem Tetrahydrofuran bei 0 °C vorgelegt und innert 20 Minuten mit einer Lösung von 8,2 g
4'-(trans-4-Pentylcyclohexyl)-4-biphenylcarboxaldehyd
in 100 ml absolutem Tetrahydrofuran versetzt. Nach beendeter Zugabe wurde das Reaktionsgemisch unter Erwärmen auf Raumtemperatur noch während 2 Stunden gerührt, anschliessend mit 100 ml 1N Schwefelsäure vorsichtig gequencht und dreimal mit je 200 ml Methylenchlorid extrahiert. Die organischen Phasen wurden noch zweimal mit je 100 ml Wasser gewaschen, über Magnesiumsulfat getrocknet und eingeengt. Es resultierten 7,90 g (96%)
4'-(trans-4-Pentylcyclohexyl)-4-biphenylmethanol
als farblose, kristalline Masse (Reinheit gemäss Gaschromatographie 99,4%), welche ohne weitere Reinigung in der folgenden Stufe verwendet wurde. Smp. 180,4 °C; Rf-Werte (Petroläther/Essigester 9:1): Edukt 0,70, Produkt 0,30.

c) In einem Sulfierkolben wurde unter Argonbegasung ein Gemisch von 3,5 g
4′-(trans-4-Pentylcyclohexyl)-4-biphenylmethanol
und 2,9 g Triphenylphosphin in 150 ml absolutem Methylenchlorid bei −20 °C vorgelegt und innert 10 Minuten portionenweise mit 3,8 g festem Tetrabrommethan versetzt. Teilweise ungelöstes Edukt löste sich hierbei langsam auf. Unter Erwärmen auf Raumtemperatur wurde das Reaktionsgemisch noch 2 Stunden gerührt. Anschliessend wurde am Rotationsverdampfer eingeengt und der kristalline Rückstand in 300 ml warmem Hexan aufgeschlämmt, durch Filtration von ausgefallenem Triphenylphosphinoxid befreit (Nachwaschen mit Hexan) und das Filtrat eingeengt. Niederdruckchromatographie (0,7 bar) des Rückstandes an Kieselgel mit Toluol als Eluens ergab 3,39 g (82%)
4-(Brommethyl)-4′-(trans-4-pentylcyclohexyl)-biphenyl
als farblose Kristalle. Dieses Material wurde ohne weitere Reinigung in der folgenden Stufe eingesetzt. Rf-Wert des Produktes (Petroläther/Essigester 97:3): 0,47.

d) In einem Sulfierkolben wurde unter Argonbegasung ein Gemisch von 2,63 g
4-(Brommethyl)-4′-(trans-4-pentylcyclohexyl)-biphenyl
und 2,2 g Triphenylphosphin in 150 ml o-Xylol während 15 Stunden zum Rückfluss erhitzt (Badtemperatur 160 °C). Nach dem Abkühlen wurde der gebildete, weisse Niederschlag abfiltriert, mehrmals mit Benzol gewaschen und am Hochvakuum (0,1 mmHg) bei 80 °C während 1 Stunde getrocknet. Es resultierten 3,48 g (80%)
[[4′-(trans-4-Pentylcyclohexyl)-4-biphenylyl]-methyl]triphenylphosphoniumbromid
als weisses Pulver (Smp. 263–265 °C), welches ohne weitere Reinigung in der folgenden Wittig-Reaktion eingesetzt wurde.

e) In einem Sulfierkolben wurde unter Argonbegasung ein Gemisch von 3,31 g
[[4′-(trans-4-Pentylcyclohexyl)-4-biphenylyl]-methyl]triphenylphosphoniumbromid
in 50 ml t-Butylmethyläther bei 0 °C vorgelegt und mit 617 mg festem Kalium-t-butylat versetzt. Nach beendeter Zugabe wurde das Reaktionsgemisch noch 15 Minuten bei 0 °C gerührt (wobei eine tieforange Färbung entstand) und dann innert 10 Minuten bei 0 °C mit einer Lösung von 912 mg trans-4-Pentylcyclohexancarboxaldehyd in 20 ml t-Butylmethyläther versetzt. Anschliessend wurde noch 30 Minuten bei 0 °C und 90 Minuten bei Raumtemperatur gerührt und dann das gelbe Reaktionsgemisch auf 150 ml Wasser gegossen und dreimal mit je 150 ml Diäthyläther extrahiert. Die organischen Phasen wurden noch zweimal mit je 100 ml Wasser gewaschen, über Magnesiumsulfat getrocknet und eingeengt. Niederdruckchromatographie (0,7 bar) des Rückstandes an Kieselgel mit Toluol als Eluens ergab 2,43 g (100%)
4-(trans-4-Pentylcyclohexyl)-4′-[2-(trans-4-pentylcyclohexyl)vinyl]biphenyl
als farblose, kristalline Masse. Dieses Material wurde ohne weitere Reinigung in der folgenden Hydrierung verwendet. Rf-Werte des Produktes (Hexan): 0,29 und 0,32 (cis/trans-Gemisch).

In analoger Weise können folgende Verbindungen hergestellt werden:

4-(trans-4-Pentylcyclohexyl)-4′-[2-(trans-4-propylcyclohexyl)äthyl]biphenyl;
Umwandlung S–S 208,1 °C, Umwandlung S–N 234,0 °C, Klp. (N–I) 263,5 °C

4-(trans-4-Pentylcyclohexyl)-4′-[2-(trans-4-butylcyclohexyl)äthyl]biphenyl;
Umwandlung S–S 215,9 °C, Umwandlung S–N 240 °C, Klp. (N–I) 259 °C

4-[2-(trans-4-Butylcyclohexyl)äthyl]-4′-(trans-4-propylcyclohexyl)-1,1′-äthylendibenzol;
Smp. (C–S) 68,9 °C, Umwandlung S–S 117,5 °C, Umwandlung S–N 171,5 °C, Klp. (N–I) 187,3 °C

4-[2-(trans-4-Butylcyclohexyl)äthyl]-4′-(trans-4-pentylcyclohexyl)-1,1′-äthylendibenzol;
Smp. (C–S) 48,0 °C, Klp. (S–I) 188,0 °C

4-(trans-4-Pentylcyclohexyl)-4′-[2-(p-(trans-4-butylcyclohexyl)phenyl)äthyl]biphenyl;
Smp. 65 °C, Klp. 331,6 °C

4-(trans-4-Pentylcyclohexyl)-4′-[2-(p-(trans-4-pentylcyclohexyl)phenyl)äthyl]biphenyl;
Klp. 323,5 °C

4-(trans-4-Pentylcyclohexyl)-4′-(trans-4-propylcyclohexyl)-1,1′-äthylendibenzol;
Smp. (C–S) 116,8 °C, Umwandlung S–N 198,5 °C, Klp. (N–I) 221,9 °C

4-Pentyl-4″-[2-(trans-4-butylcyclohexyl)äthyl]-p-terphenyl;
Smp. (C–S) 149,8 °C, Umwandlung S–S 215,5 °C, Umwandlung S–N 263 °C, Klp. (N–I) 267 °C

4-[2-(trans-4-Butylcyclohexyl)äthyl]-4′-(p-pentylphenyl)-1,1′-äthylendibenzol;
Smp. (C–S) 0 °C, Umwandlung S–S 76,5 °C, Klp. (S–I) 194 °C

1-[2-(trans-4-Butylcyclohexyl)äthyl]-4-(trans-4-pentylcyclohexyl)benzol;
Smp. (C–S) 28,1 °C, Klp. (S–I) 138,4 °C

1-[2-(trans-4-Pentylcyclohexyl)äthyl]-4-(trans-4-propylcyclohexyl)benzol;
Smp. (C–S) 40,2 °C, Umwandlung S–N 126 °C, Klp. (N–I) 132,7 °C

1-[2-(trans-4-Butylcyclohexyl)äthyl]-4-[2-(trans-4-pentylcyclohexyl)äthyl]benzol;
Smp. (C–S) 10,4 bzw. 21,6 °C (2 Modifikationen), Klp. (S–I) 125,8 °C.

Beispiel 2

a) In einem Sulfierkolben wurde unter Argonbegasung eine Suspension von 2,14 g 4,4′-Bis(hydroxymethyl)biphenyl (hergestellt durch Reduktion des Biphenyl-4,4′-dicarbonsäure-dimethylesters mit Lithiumaluminiumhydrid) und 5,5 g Triphenylphosphin in 60 ml Methylenchlorid bei −10 °C vorgelegt und innert 3 Minuten mit 7,3 g Tetrabromäthan versetzt. Nach beendeter Zugabe wurde das Reaktionsgemisch unter allmählichem Erwärmen auf +10 °C noch während 16 Stunden gerührt und dann nach Einengen am Rotationsverdampfer mit heissem Benzol trituriert. Filtration und Einengen ergab 12,67 g Rohprodukt, welches nach Niederdruckchromatographie (0,5 bar) mit Toluol an Kieselgel 2,60 g (76%) 4,4′-Bis(brommethyl)biphenyl lieferte. Eine Umkristallisation aus 50 ml Aceton ergab 1,78 g des Dibromids als farblose Kristalle mit Smp. 172,8 °C. Rf-Wert (Hexan/Toluol 2:1): 0,41.

b) In einem Sulfierkolben wurden unter Argonbegasung 122 mg Magnesiumspäne mit 3 ml absolutem Tetrahydrofuran überschichtet und nach Zugabe eines Jodkristalles mit einer Lösung von 1,24 g trans-1-(Brommethyl)-4-pentylcyclohexan in 7 ml absolutem Tetrahydrofuran versetzt. Nach beendeter Zugabe wurde noch während 30 Minuten zum Rückfluss erhitzt und dann das auf −78 °C abgekühlte Reaktionsgemisch der Reihe nach mit 0,7 ml einer 0,1N Lösung von Dilithiumtetrachlorokuprat in Tetrahydrofuran und mit einer Lösung von 670 mg 4,4′-Bis(brommethyl)biphenyl in 10 ml absolutem Tetrahydrofuran versetzt. Die anfänglich auftretende Gelbfärbung verschwand nach wenigen Minuten wieder. Anschliessend wurde das auf −15 °C erwärmte Reaktionsgemisch noch während 17 Stunden gerührt, dann mit 25 ml 2N Salzsäure versetzt und dreimal mit je 50 ml Diäthyläther extrahiert. Die organischen Phasen wurden mit 50 ml gesättigter Kochsalzlösung gewaschen, über Magnesiumsulfat getrocknet und eingeengt. Niederdruckchromatographie (0,5 bar) des Rückstandes (1,06 g) an Kieselgel mit Hexan und anschliessend Hexan/Diäthyläther (19:1) als Eluens ergab der Reihe nach

1,1′-Äthylen-bis(trans-4-pentylcyclohexan),
228 mg (22%)
4,4′-Bis[2-(trans-4-pentylcyclohexyl)äthyl]-biphenyl,
78 mg (9%)
4-(Brommethyl)-4′-[2-(trans-4-pentylcyclohexyl)-äthyl]biphenyl

sowie 4,4′-Bis(brommethyl)biphenyl. Eine einmalige Kristallisation der 228 mg
4,4′-Bis[2-(trans-4-pentylcyclohexyl)äthyl]-biphenyl
aus Hexan lieferte 194 mg farblose Nadeln mit Klp. >300 °C (weitere Phasenübergänge bei 68 °C, 84 °C, 161 °C, 203 °C, 221 °C und 224 °C). Rf-Werte (Hexan):

4,4′-Bis(brommethyl)-biphenyl 0,14;
4-(Brommethyl)-4′-[2-(trans-4-pentylcyclohexyl)-äthyl]biphenyl 0,24;
4,4′-Bis[2-(trans-4-pentylcyclohexyl)äthyl]-biphenyl 0,40.

Beispiel 3

a) 138,1 g 4-Nitroanilin wurden in 600 ml halbkonzentrierter Salzsäure unter Erwärmen gelöst. Die Lösung wurde auf Raumtemperatur gekühlt und mit 800 g Eis versetzt, wobei ein Niederschlag ausfiel und die Temperatur auf −10 °C sank. Unter Eisbad-Kühlung wurden 76,0 g Natriumnitrit (90%ig) zum Reaktionsgemisch zugesetzt, worauf die Temperatur auf 2 °C stieg und sich der Niederschlag innert 5 Minuten fast vollständig löste. Die erhaltene Diazoniumsalz-Lösung wurde weitere 15 Minuten bei 2 °C gerührt und bis zur Weiterverarbeitung im Eisbad aufbewahrt.

b) 121,2 g N,N-Dimethylanilin wurden in 400 ml Eisessig gelöst, auf 5 °C gekühlt und bei 5–14 °C (Eisbad-Kühlung) innert 30 Minuten tropfenweise mit der in Absatz a) hergestellten Diazoniumsalz-Lösung versetzt. Hierbei fiel ein braunroter Niederschlag aus. Das Reaktionsgemisch wurde 30 Minuten bei 5 °C weitergerührt und dann innert 25 Minuten portionenweise mit 300 g Natriumacetat versetzt. Anschliessend wurde das Reaktionsgemisch mit 100 ml Äthanol versetzt, 30 Minuten bei 5 °C und weitere 90 Minuten bei Raumtemperatur gerührt, mit 2 l Wasser versetzt und genutscht. Der Rückstand wurde mit 500 ml Wasser gewaschen und im Vakuum bei 50 °C getrocknet, wobei 264,3 g 4-Nitro-4′-(dimethylamino)azobenzol erhalten wurden.

c) Eine Suspension von 88,1 g 4-Nitro-4′-(dimethylamino)azobenzol in 1080 ml Äthanol wurde unter Rühren zum leichten Rückfluss erwärmt, innert 35 Minuten tropfenweise mit 1017 g 25%iger Natriumhydrogensulfid-Lösung versetzt und dann noch 1 Stunde bei leichtem Rückfluss gerührt. Das Reaktionsgemisch wurde auf Raumtemperatur gekühlt, mit 2120 ml Wasser versetzt und genutscht. Der Rückstand wurde mit Wasser/Äthanol (Vol. 3:1) gewaschen und bei 50 °C im Vakuum getrocknet, wobei 55,7 g 4-Amino-4′-(dimethylamino)azobenzol erhalten wurden; Smp. 182,5–187,4 °C.

d) 48,0 g 4-Amino-4′-(dimethylamino)azobenzol wurden in 111 ml halbkonzentrierter Salzsäure unter Erwärmen gelöst. Die Lösung wurde gekühlt und bei −3 bis 0 °C unter Rühren innert 10 Minuten tropfenweise mit 80,4 ml 2,5M Natriumnitrit-Lösung versetzt. Die erhaltene Diazoniumsalzlösung wurde noch 15 Minuten bei −3 bis 0 °C weitergerührt, dann mit 6,0 g Harnstoff versetzt und bis zur Weiterverarbeitung im Kühlbad aufbewahrt.

e) Eine Lösung von 25,7 g o-Chlorphenol in 203 ml 2N Natronlauge wurde auf 5 °C gekühlt und unter Rühren bei 0 bis 8 °C innert 15 Minuten tropfenweise mit der in Absatz d) hergestellten Diazoniumsalz-Lösung versetzt. Damit das Gemisch während der ganzen Reaktion alkalisch blieb, wurden hierbei weitere 65 ml 2N Natronlauge zugegeben. Anschliessend wurde das Reaktionsgemisch noch 1 Stunde bei 2 °C gerührt, dann auf 15 °C erwärmen gelassen und genutscht. Der Rückstand wurde mit 200 ml Wasser gewaschen und im Vakuum getrocknet. Die erhaltenen dunkelbraunen Kristalle (68,1 g) wurden in Methylenchlorid/Hexan umkristallisiert, wobei 51,8 g
3-Chlor-4′-[(p-dimethylaminophenyl)azo]-4-hydroxyazobenzol
erhalten wurden.

f) Ein Gemisch von 51,8 g
3-Chlor-4′-[(p-dimethylaminophenyl)azo]-4-hydroxyazobenzol,
570 ml Äthanol, 24,3 g 1-Bromheptan, einer Spatelspitze Natriumjodid und 19,5 g Kaliumcarbonat wurden unter Rühren 40 Stunden am Rückfluss gekocht, wobei die Reaktion mittels Dünnschichtchromatrographie verfolgt wurde und nach 23 Stunden Reaktionszeit nochmals 5,0 g 1-Bromheptan und 5,3 g Kaliumcarbonat zugesetzt wurden. Anschliessend wurde das Reaktionsgemisch auf Raumtemperatur gekühlt und genutscht. Der Rückstand wurde mit Äthanol gewaschen und im Vakuum bei 60 °C getrocknet. Die erhaltenen rotbraunen Kristalle (82,9 g) wurden an Kieselgel mit Methylenchlorid als Eluens chromatographiert und anschliessend aus Methylenchlorid/Hexan umkristallisiert. Hierbei wurden 41,6 g
3-Chlor-4′-[(p-dimethylaminophenyl)azo]-4-heptyloxyazobenzol
als purpurrote Kristalle erhalten; Smp. (C–N) 146,3–146,8 °C, Klp. (N–I) 234,0–234,3 °C; $E_{365}$ = 15140, $E_{479}$ = 41330.

Beispiel 4

a) Zu 55,8 ml konzentrierter Schwefelsäure wurden bei Raumtemperatur unter Rühren 50,0 g Kaliumpersulfat zugegeben und das Gemisch noch 1 Stunde gerührt. Dann wurde die farblose Suspension auf 900 g Eis gegossen und unter Rühren portionenweise mit Kaliumcarbonat (149,3 g) versetzt, bis ein pH-Wert von 5,2 erreicht war. Die kalte Suspension wurde genutscht und das Filtrat auf Raumtemperatur erwärmt und unter Rühren innert 20 Minuten tropfenweise mit einer Lösung von 7,3 g 2-Chlor-4-nitroanilin in 50 ml Dioxan versetzt, wobei sofortige Gelbfärbung und Bildung eines Niederschlages erfolgte. Das Gemisch wurde 20 Stunden bei Raumtemperatur gerührt, genutscht und der Rückstand mit Wasser gewaschen und im Vakuum bei 60 °C getrocknet. Die erhaltenen braunen Kristalle (6,4 g) wurden an Kieselgel mit Toluol/Hexan (Vol. 1:1) als Eluens chromatographiert, wobei 3,4 g 2-Chlor-4-nitro-1-nitrosobenzol als braune Kristalle erhalten wurden.

b) Eine Suspension von 0,840 g 2-Chlor-4-nitro-1-nitrosobenzol in 20 ml Eisessig wurde auf 70 °C erwärmt und unter Rühren mit einer 110 °C warmen Lösung von 0,926 g 4-Amino-4′-hydroxybiphenyl (hergestellt gemäss Chem. Berichte 27 (1894) 2627) in 43 ml Eisessig versetzt. Die dunkle Lösung wurde noch 2,25 Stunden bei 70 °C gerührt, dann auf Raumtemperatur gekühlt und mit Methylenchlorid extrahiert. Die Extrakte wurden mit Wasser, 10%-iger Natriumhydrogencarbonat-Lösung und nochmals mit Wasser gewaschen, über Natriumsulfat getrocknet und im Vakuum eingeengt. Hierbei wurden 1,3 g rohes 2-Chlor-4-nitro-4′-(4-hydroxybiphenyl)azobenzol als braune Kristalle erhalten.

c) Ein Gemisch von 1,3 g rohem 2-Chlor-4-nitro-4′-(4-hydroxybiphenyl)azobenzol, 20 ml Äthanol, 0,658 g 1-Bromheptan, 0,528 g Kaliumcarbonat und einer Spatelspitze Natriumjodid wurde unter Rühren 22 Stunden am Rückfluss gekocht. Anschliessend wurde die braune Suspension im Vakuum eingeengt und an Kieselgel mit Toluol/Hexan als Eluens chromatographiert. Nach Umkristallisation aus Methylenchlorid/Hexan wurden 0,863 g
2-Chlor-4-nitro-4′-(4-heptyloxybiphenyl)azobenzol
als orange Kristalle erhalten; Smp. (C–N) 83,1–83,7 °C, Klp. (N–I) 179,4–197,8 °C; $E_{300}$ = 11580, $E_{406}$ = 25910.

Beispiel 5

a) 50 ml rauchende Schwefelsäure (mit 65% Schwefeltrioxid) wurden auf 0 °C gekühlt. Unter Rühren wurden innert 5 Minuten 1,04 g 2,6-Dimethyl-1,5-dinitroanthrachinon (hergestellt gemäss H. Hopf et al., Annalen der Chemie 585 (1954) 161) in die Schwefelsäure eingetragen. Das Gemisch wurde 5 Minuten bei 0 °C gerührt und dann portionenweise in 500 g Eis eingetragen. Anschliessend wurde das Reaktionsgemisch noch 1 Stunde gerührt, dann genutscht und der Rückstand mit Wasser gewaschen und im Vakuum bei 50 °C getrocknet. Hierbei wurden 0,920 g rohes 6-Methyl-5-nitro-1,2-isoxazol-anthrachinon als schwarze Kristalle erhalten.

b) Ein Gemisch von 0,920 g rohem 6-Methyl-5-nitro-1,2-isoxazolanthrachinon und 5,0 g 4-Heptylphenol wurde unter Rühren auf 80 °C erwärmt, dann mit 1,0 g Kaliumcyanid versetzt und noch 15 Minuten bei 80 °C gerührt. Anschliessend wurde die Temperatur auf 100 °C erhöht und das Gemisch noch 4 Stunden gerührt. Nach Abkühlen auf Raumtemperatur wurde das Reaktionsgemisch mit 30 ml Wasser versetzt und 15 Minuten gerührt, dann auf 200 ml Wasser gegossen und mit Chloroform extrahiert. Die Extrakte wurden mit Wasser, 3N Salzsäure und nochmals mit Wasser gewaschen und über Natriumsulfat getrocknet. Das erhaltene dunkle Öl (5,1 g) wurde an Kieselgel mit Methylenchlorid/Hexan (Vol. 1:1) und Methylenchlorid als Eluens chromatographisch gereinigt. Nach Umkristallisation aus Methylenchlorid/Hexan wurden schliesslich 0,530 g
1-Amino-6-methyl-5-nitro-2-anthrachinoncarbonsäure-p-heptylphenylester
als purpurrote Kristalle erhalten; Smp. 257,0–259,2 °C; $E_{304}$ = 7250, $E_{507}$ = 10030.

c) Eine Suspension von 0,426 g
1-Amino-6-methyl-5-nitro-2-anthrachinoncarbonsäure-p-heptylphenylester,
50 ml Toluol, 50 ml Äthanol und 0,10 g mit 2 Gew.-% Blei vergiftetem Palladium/Bariumcarbonat-Katalysator wurde bei Raumtemperatur bis zum Stillstand hydriert. Das Reaktionsgemisch wurde filtriert. Das Filtrat wurde im Vakuum eingeengt und an Kieselgel mit Methylenchlorid als Eluens chromatographisch gereinigt. Nach Umkristallisation aus Methylenchlorid/Hexan wurden 0,334 g
1,5-Diamino-6-methyl-2-anthrachinoncarbonsäure-p-heptylphenylester
als violette Kristalle erhalten; Smp. (C–N) 163,7–165,7 °C, Klp. (N–I) 190,9–191,4 °C, nematisch; $E_{277}$ = 15280, $E_{524}$ = 14700.

Beispiel 6

a) 23,8 g 1,5-Diaminoanthrachinon wurden bei Raumtemperatur und unter Rühren innert 15 Minuten in 238 ml konzentrierter Schwefelsäure gelöst. Dann wurde die dunkle Lösung unter Rühren in 4760 ml Wasser einfliessen gelassen. Der erhaltene Niederschlag wurde genutscht, mit Wasser gewaschen und dann in einem Sulfierkolben unter Stickstoff in 2023 ml Wasser suspendiert. Die Suspension wurde während 30 Minuten gut gerührt, dann mit 107,1 ml 45%-iger Natronlauge

versetzt, auf 40 °C erwärmt, mit 59,5 g Natriumdithionit (85%-ig) versetzt und noch 45 Minuten bei 40–41 °C gerührt. Die erhaltene Lösung wurde mit einem Gemisch von 21,18 ml 37%-iger Formaldehyd-Lösung (0,2818 Mol) und 190,4 ml Wasser versetzt, innert 40 Minuten auf 80 °C erwärmt und noch 3 Minuten bei 80–81 °C gehalten. Das Reaktionsgemisch wurde ohne weiteres Erwärmen durch einen mit Stickstoff gespülten Tropftrichter mit 428,4 ml 13%-iger Natriumhypochlorit-Lösung versetzt (wobei die Innentemperatur auf 93 °C anstieg), dann auf Raumtemperatur gekühlt und genutscht. Der Rückstand wurde mit Wasser gewaschen, bis das Filtrat neutral war, und dann im Vakuum über Kaliumhydroxid getrocknet. Ausbeute: 23,7 g 1,5-Diamino-2,6-dimethylanthrachinon in Form rot-brauner Kristalle.

b) 0,340 g 1,5-Diamino-2,6-dimethylanthrachinon wurden in 50 ml Chloroform suspendiert und die Suspension mit 20 ml Nitrobenzol, 0,5 ml Anilin und 0,5 g Kaliumcarbonat versetzt. Das Chloroform wurde abgedampft und die Mischung während 2 Stunden bis zum Rückfluss des Nitrobenzols erhitzt. Da keine Reaktion stattfand, wurde die Mischung über Nacht abkühlen gelassen, dann in einen Sulfierkolben übergeführt, mit 2,0 ml Anilin nachgespült und mit 2,0 g Kaliumcarbonat versetzt. Anschliessend wurde das Reaktionsgemisch im Ölbad (245 °C) unter Rühren und Stickstoffbegasung 95 Minuten am Rückfluss gekocht, dann auf Raumtemperatur abkühlen gelassen, mit 50 ml Toluol in einen Rundkolben gespült und während 75 Minuten im Wasserdampf destilliert. Das Destillat wurde verworfen. Die noch heisse Suspension (Rückstand) wurde genutscht und mit Wasser nachgewaschen. Der Rückstand wurde im Vakuum bei 60 °C getrocknet, wobei 0,606 g schwarzviolette Kristalle erhalten wurden. Dieses Rohprodukt wurde in 600 ml Toluol 1 Stunde am Rückfluss gekocht und dann heiss genutscht (Nachwaschen mit ca. 100 ml Toluol). Der Rückstand wurde im Vakuum bei 60 °C getrocknet und ergab 0,157 g dunkelviolette Kristalle. Das Filtrat wurde im Vakuum eingeengt, in 30 ml Toluol zum Sieden erhitzt, abkühlen gelassen, mit 200 ml Hexan versetzt und genutscht. Der Rückstand wurde im Vakuum bei 60 °C getrocknet, wobei 0,352 g Produkt in Form dunkelvioletter Kristalle erhalten wurden. Das Filtrat wurde eingedampft (97 mg violette Kristalle) und an Kieselgel mit Chloroform chromatographiert, wobei weitere 55 mg Produkt erhalten wurden. Ausbeute: 0,407 g (71,7%) 1,5-Diamino-2,6-bis(phenyliminomethyl)anthrachinon in Form dunkelvioletter Kristalle.

c) 0,625 g
1,5-Diamino-2,6-bis(phenylimino-methyl)anthrachinon
wurden in 10 ml konzentrierter Schwefelsäure gelöst, unter Rühren tropfenweise mit Wasser (ca. 1,5 ml) versetzt, bis die Innentemperatur 70 °C erreichte, und noch 30 Minuten weitergerührt. Unter Kühlung mit einem Wasserbad wurden 30 ml Wasser zum Reaktionsgemisch so zugetropft, dass die Temperatur nicht über 65 °C stieg. Das Gemisch wurde noch 10 Minuten nachgerührt und dann genutscht. Der Rückstand wurde mit 100 ml Wasser neutralgewaschen, mit 20 ml Diäthyläther nachgewaschen und zuerst im Vakuum bei 60 °C und dann im Hochvakuum bei 80 °C getrocknet. Ausbeute: 0,381 g (92,1%) rohes 1,5-Diamino-2,6-diformylanthrachinon in Form dunkelvioletter Kristalle.

d) 51 mg 1,5-Diamino-2,6-diformylanthrachinon wurden in 50 ml Dioxan suspendiert, mit 92 mg p-Heptylbenzyl-triphenylphosphoniumbromid und 48 mg fein pulverisiertem Kaliumcarbonat versetzt und unter Stickstoff 44 Stunden zum leichten Rückfluss erhitzt. Nach 18, 22, 24 und 42 Stunden wurden jeweils weitere 23 mg p-Heptylbenzyl-triphenylphosphoniumbromid und nach 42 Stunden zusätzlich 48 mg fein pulverisiertes Kaliumcarbonat zum Reaktionsgemisch zugegeben. Anschliessend wurde das Reaktionsgemisch abkühlen gelassen und im Vakuum zur Trockene eingedampft. Der Rückstand wurde in 20 ml Methylenchlorid aufgenommen und an Kieselgel mit Methylenchlorid chromatographiert. Hierbei wurden 46 mg (41,5%) 1,5-Diamino-2,6-bis(E–p-heptylstyryl)anthrachinon als dunkelviolette Kristalle und 21 mg (26,0%)
1,5-Diamino-6-formyl-2-(E–p-heptylstyryl)anthrachinon
als dunkelviolette Kristalle erhalten. Umkristallisation der letzteren aus Chloroform/Hexan ergab Smp. 157–162 °C, Klp. > 290 °C; $E_{352}$ = 8790, $E_{533}$ = 19950.

Beispiel 7

Ein Gemisch von 1,5 g 1,5-Diamino-2,6-diformylanthrachinon und 1500 ml trockenem Toluol wurde unter Rühren und Stickstoffbegasung 30 Minuten zum Rückfluss erhitzt. Anschliessend wurde eine Suspension von 2,7 g p-Heptylbenzyl-triphenylphosphoniumbromid, 200 ml trockenem Toluol und 0,62 g Kalium-t-butylat zum heissen Gemisch zugegeben. Das Reaktionsgemisch wurde noch 10 Minuten gerührt, dann auf 80 °C abkühlen gelassen und genutscht. Der Rückstand wurde verworfen und das Filtrat durch Chromatographie an Kieselgel und Umkristallisation aus Chloroform/Hexan gereinigt. Ausbeute: 0,87 g (36,5%)
1,5-Diamino-6-formyl-2-(E–p-heptylstyryl)anthrachinon
als dunkelviolette Kristalle; Smp. (C–S) 157,1 °C, Klp. (S–I) 288,0 °C; $E_{352}$ = 8790, $E_{533}$ = 19950.

**Patentansprüche**

1. Flüssigkristallines Gemisch enthaltend eine oder mehrere Verbindungen der allgemeinen Formel

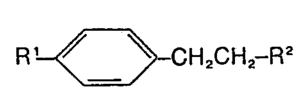
I

worin
$R^1$ Alkyl, Alkoxy, p-Alkylphenyl, p-Alkoxyphenyl, trans-4-Alkylcyclohexyl, 4′-Alkyl-4-biphenylyl, p-(trans-4-Alkylcyclohexyl)phenyl,

2-(trans-4-Alkylcyclohexyl)äthyl oder p-[2-(trans-4-Alkylcyclohexyl)äthyl]phenyl und $R^2$ trans-4-Alkylcyclohexyl bedeuten, oder $R^1$ trans-4-Alkylcyclohexyl und $R^2$ p-(trans-4-Alkylcyclohexyl)phenyl, p-[2-(trans-4-Alkylcyclohexyl)äthyl]phenyl oder 4'-(trans-4-Alkylcyclohexyl)-4-biphenylyl bedeuten, oder $R^1$ p-Alkylphenyl und $R^2$ p-[2-(trans-4-Alkylcyclohexyl)äthyl]phenyl bedeuten, und die Alkyl- und Alkoxyreste in den Substituenten $R^1$ und $R^2$ geradkettige Gruppen mit 1 bis 7 Kohlenstoffatomen bezeichnen, und einen oder mehrere dichroitische Farbstoffe der allgemeinen Formeln

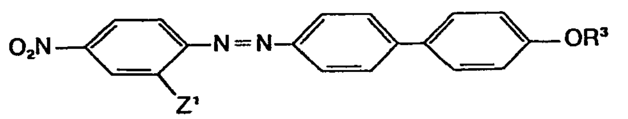
II

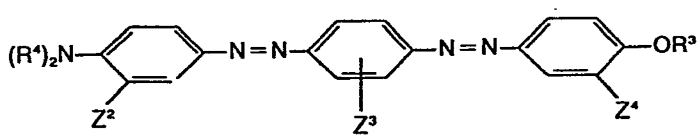
III

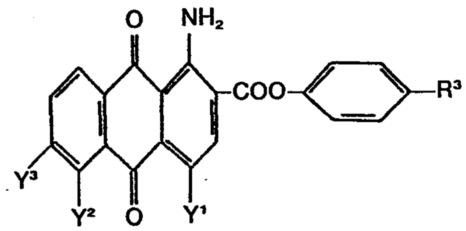
IV

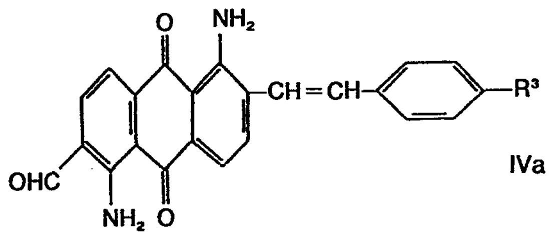
IVa

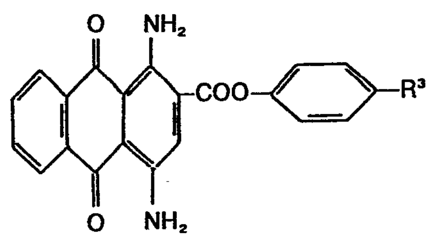
V

worin $R^3$ geradkettiges $C_1$–$C_{12}$-Alkyl und $R^4$ geradkettiges $C_1$–$C_4$-Alkyl darstellen, $Z^1$ Wasserstoff oder Chlor bezeichnet, eine der Gruppen $Z^2$, $Z^3$ und $Z^4$ Chlor und die beiden andern Wasserstoff bedeuten, und $Y^1$ Wasserstoff, $Y^2$ Amino und $Y^3$ Methyl bezeichnen oder $Y^1$ Hydroxy und $Y^2$ und $Y^3$ Wasserstoff bezeichnen.

2. Flüssigkristallines Gemisch nach Anspruch 1, dadurch gekennzeichnet, dass es 0,2 bis 12 Gew.-% Farbstoff der Formeln II–V und IVa enthält.

3. Flüssigkristallines Gemisch nach Anspruch 1 oder 2, dadurch gekennzeichnet, dass es 0,2 bis 6 Gew.-% Farbstoff der Formel V enthält.

4. Flüssigkristallines Gemisch nach Anspruch 1 oder 2, dadurch gekennzeichnet, dass es 0,2 bis 4 Gew.-% Farbstoff der Formel IV enthält.

5. Flüssigkristallines Gemisch nach Anspruch 1 oder 2, dadurch gekennzeichnet, dass es 0,2 bis 4 Gew.-% Farbstoff der Formel IVa enthält.

6. Flüssigkristallines Gemisch nach Anspruch 1 oder 2, dadurch gekennzeichnet, dass es 0,2 bis 4 Gew.-% Farbstoff der Formel III enthält.

7. Flüssigkristallines Gemisch nach Anspruch 1 oder 2, dadurch gekennzeichnet, dass es 0,2 bis 8 Gew.-% Farbstoff der Formel II enthält.

8. Flüssigkristallines Gemisch nach einem der Ansprüche 1 bis 7, dadurch gekennzeichnet, dass es einen oder mehrere Farbstoffe der Formel II, einen oder mehrere Farbstoffe der Formeln III, IV oder IVa und einen oder mehrere Farbstoffe der Formel V enthält.

9. Flüssigkristallines Gemisch nach Anspruch 8, dadurch gekennzeichnet, dass es 0,1–0,4 Gewichtsteile Farbstoff der Formel II und 0,2–0,6 Gewichtsteile Farbstoff der Formeln III, IV oder IVa pro Gewichtsteil Farbstoff der Formel V enthält.

10. Flüssigkristallines Gemisch nach einem der Ansprüche 1 bis 9, dadurch gekennzeichnet, dass $R^3$ geradkettiges $C_5$–$C_9$-Alkyl darstelllt, $R^4$ Methyl oder Äthyl bezeichnet und $Z^4$ Chlor und $Z^2$ und $Z^3$ Wasserstoff bedeuten.

11. Flüssigkristallines Gemisch nach einem der Ansprüche 1 bis 10, dadurch gekennzeichnet, dass es eine oder mehrere Verbindungen der Formel I in einer Gesamtmenge von 7–90 Gew.-% enthält.

12. Flüssigkristallines Gemisch nach einem der Ansprüche 1 bis 11, dadurch gekennzeichnet, dass
$R^1$ Alkyl, Alkoxy, trans-4-Alkylcyclohexyl, 4'-Alkyl-4-biphenylyl oder p-(trans-4-Alkylcyclohexyl)phenyl und
$R^2$ trans-4-Alkylcyclohexyl
bedeuten, oder
$R^1$ trans-4-Alkylcyclohexyl und
$R^2$ p-[2-(trans-4-Alkylcyclohexyl)äthyl]phenyl oder 4'-(trans-4-Alkylcyclohexyl)-4-biphenylyl
bedeuten.

13. Flüssigkristallines Gemisch nach einem der Ansprüche 1 bis 12, dadurch gekennzeichnet, dass es zusätzlich eine oder mehrere Verbindungen der allgemeinen Formeln

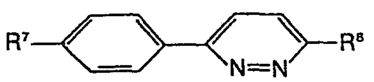
XXIV

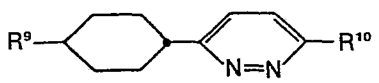
XXV

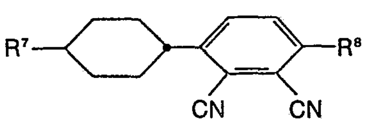
XXVI

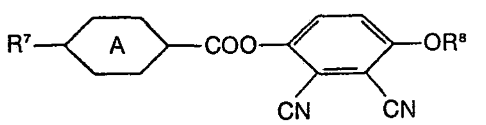
XXVII

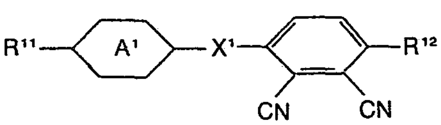
XXVIII

worin $R^7$ und $R^8$ geradkettiges $C_1$–$C_7$-Alkyl und Ring A 1,4-Phenylen oder trans-1,4-Cyclohexylen bezeichnen; $R^9$ geradkettiges $C_1$–$C_{12}$-Alkyl und $R^{10}$ geradkettiges
$C_1$–$C_{10}$-Alkyl, $C_2$–$C_{10}$–1-Alkinyl, $C_1$–$C_{10}$-Alkoxy, p-($C_1$–$C_{10}$-Alkyl)phenyl, p-($C_1$–$C_{10}$-Alkoxy)phenyl oder trans-4-($C_1$–$C_{10}$-Alkyl)cyclohexyl
bedeuten; $R^{11}$ und $R^{12}$ geradkettiges $C_1$–$C_{12}$-Alkyl oder an einem aromatischen Ring auch geradkettiges $C_1$–$C_{12}$-Alkoxy bezeichnen, oder einer der Reste $R^{11}$ und $R^{12}$ auch eine Gruppe der allgemeinen Formel

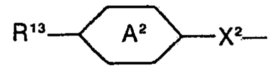
XXIX

bezeichnet; $X^1$ und $X^2$ für einfache Kovalenzbindungen oder eine dieser Gruppen auch für $-CH_2CH_2-$ stehen; die Ringe $A^1$ und $A^2$ 1,4-Phenylen oder, sofern $X^1$ oder $X^2$ für $-CH_2CH_2-$ steht, auch trans-1,4-Cyclohexylen darstellen; und $R^{13}$ geradkettiges $C_1$–$C_{12}$-Alkyl oder an einem aromatischen Ring $A^2$ auch geradkettiges $C_1$–$C_{12}$-Alkoxy bedeutet,
enthält.

14. Flüssigkristallines Gemisch nach einem der Ansprüche 1 bis 12, dadurch gekennzeichnet, dass es zusätzlich eine oder mehrere Verbindungen der allgemeinen Formeln

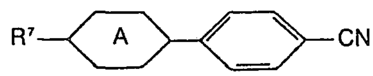
XVI

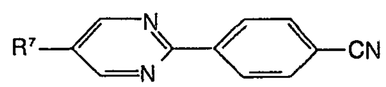
XVII

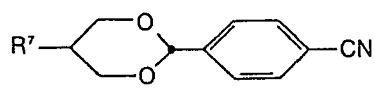
XVIII

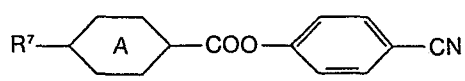
XIX

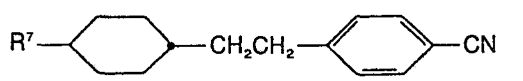
XX

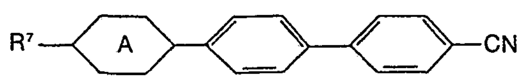
XXI

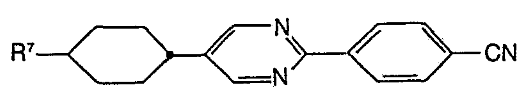
XXII

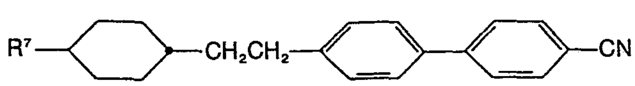
XXIII

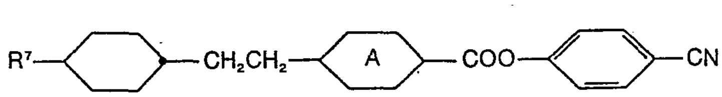
XXIIIa

worin $R^7$ geradkettiges $C_1$–$C_7$-Alkyl und Ring A 1,4-Phenylen oder trans-1,4-Cyclohexylen bedeuten,
enthält.

15. Flüssigkristallines Gemisch nach einem der Ansprüche 1 bis 13, dadurch gekennzeichnet, dass es zusätzlich eine oder mehrere Verbindungen der allgemeinen Formeln

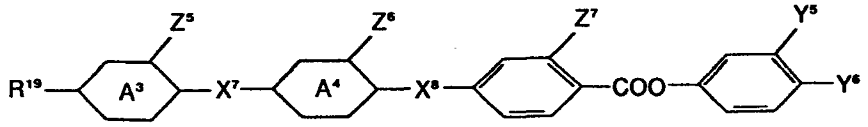

XXX

worin $X^8$ eine einfache Kovalenzbindung oder –COO– bezeichnet; $X^7$ eine einfache Kovalenzbindung, –COO–, $-CH_2CH_2-$ oder, sofern $X^8$ –COO– bezeichnet, auch 1,4-Phenylen bedeutet; Ring $A^3$ für einen Benzolring oder für trans-1,4-Cyclohexylen steht; Ring $A^4$ einen Benzolring oder, sofern $X^8$ –COO– und $X^7$ eine einfache Kovalenzbindung, –COO– oder $-CH_2CH_2-$ bezeichnet, auch trans-1,4-Cyclohexylen darstellt; die Reste $Z^5$, $Z^6$ und $Z^7$ Wasserstoff oder an einem Benzolring, welcher nicht mit einem weiteren Ring über eine einfache Kovalenzbindung direkt verknüpft ist, auch Halogen, Cyano oder Methyl bedeuten; $Y^6$ Cyano, Nitro, 2,2-Dicyanovinyl oder, sofern $Y^5$ für Wasserstoff steht, auch 2,2-Dicyano-1-methylvinyl darstellt; $Y^5$ Halogen, Cyano, $C_1$–$C_3$-Alkyl oder, sofern $X^7$ für p-Phenylen oder $Y^6$ für Nitro steht, oder $Z^5$ und/oder $Z^6$ von Wasserstoff verschieden ist, auch Wasserstoff bezeichnet; und $R^{19}$ $C_1$–$C_{12}$-Alkyl oder an einem Benzolring auch $C_1$–$C_{12}$-Alkoxy bedeutet,
oder

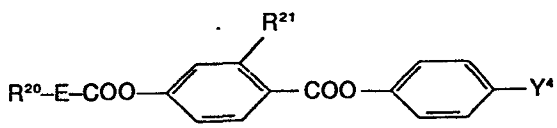

XXXI

worin $R^{21}$ Wasserstoff, Halogen oder Cyano bezeichnet; $Y^4$ Cyano, 2,2-Dicyanovinyl oder 2,2-Dicyano-1-methylvinyl darstellt; $R^{20}$ und E zusammen
p–$R^{20}$-Phenyl, trans-4–$R^{20}$-Cyclohexyl,
4'–$R^{20}$–4-Biphenylyl,
p-(trans-4–$R^{20}$-Cyclohexyl)phenyl,
p-(5–$R^{20}$–2-Pyrimidinyl)phenyl,
p-[2-(p'–$R^{20}$-Phenyl)äthyl]phenyl,
p-[2-(trans-4–$R^{20}$-Cyclohexyl)äthyl]phenyl,
trans-4-[2-(p–$R^{20}$-Phenyl)äthyl]cyclohexyl oder
trans-4-[2-(trans-4–$R^{20}$-Cyclohexyl)äthyl]cyclohexyl
bedeutet; und $R^{20}$ geradkettiges $C_1$–$C_{12}$-Alkyl oder an einem Benzolring auch geradkettiges $C_1$–$C_{12}$-Alkoxy bezeichnet,
enthält.

16. Verwendung eines flüssigkristallinen Gemisches gemäss einem der Ansprüche 1 bis 15 für elektro-optische Zwecke.

**Claims**

1. A liquid crystalline mixture containing one or more compounds of the general formula

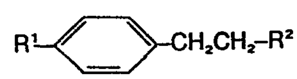

I

wherein $R^1$ signifies
alkyl, alkoxy, p-alkylphenyl, p-alkoxyphenyl, trans-4-alkylcyclohexyl, 4'-alkyl-4-biphenylyl, p-(trans-4-alkylcyclohexyl)phenyl, 2-(trans-4-alkylcyclohexyl)ethyl or p-[2-(trans-4-alkylcyclohexyl)ethyl]phenyl and
$R^2$ signifies trans-4-alkylcyclohexyl, or
$R^1$ signifies trans-4-alkylcyclohexyl and
$R^2$ signifies p-(trans-4-alkylcyclohexyl)phenyl, p-[2-(trans-4-alkylcyclohexyl)ethyl]phenyl or 4'-(trans-4-alkylcyclohexyl)-4-biphenylyl, or
$R^1$ signifies p-alkylphenyl and
$R^2$ signifies p-[2-(trans-4-alkylcyclohexyl)ethyl]phenyl,
and the alkyl and alkoxy residues in the substituents $R^1$ and $R^2$ denote straight-chain groups with 1 to 7 carbon atoms,
and one or more dichroic colouring substances of the general formulae

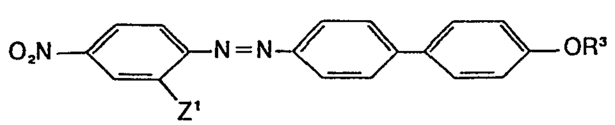

II

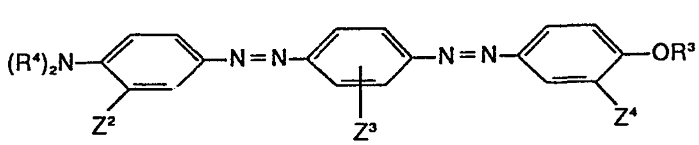

III

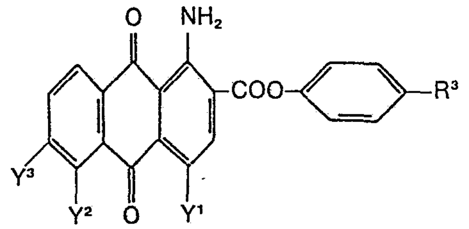

IV

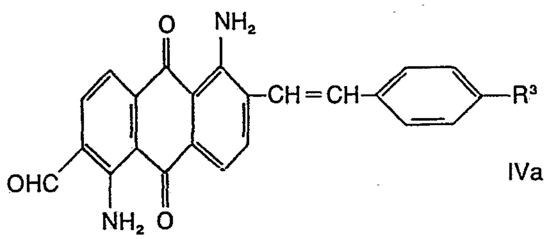

IVa

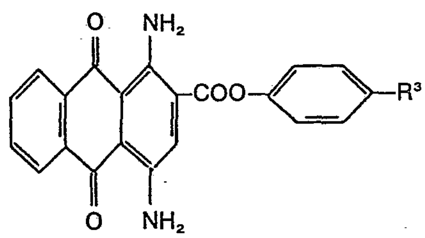

V

wherein $R^3$ represents straight-chain $C_1$–$C_{12}$-alkyl and $R^4$ represents straight-chain $C_1$–$C_4$-alkyl, $Z^1$ denotes hydrogen or chlorine, one of the groups $Z^2$, $Z^3$ and $Z^4$ signifies chlorine and the other two signify hydrogen, and $Y^1$ denotes hydrogen, $Y^2$ denotes amino and $Y^3$ denotes methyl or $Y^1$ denotes hydroxy and $Y^2$ and $Y^3$ denote hydrogen.

2. A liquid crystalline mixture according to claim 1, characterized in that it contains 0.2 to 12 wt.% of colouring substance of formulae II–V and IVa.

3. A liquid crystalline mixture according to claim 1 or 2, characterized in that it contains 0.2 to 6 wt.% of colouring substance of formula V.

4. A liquid crystalline mixture according to claim 1 or 2, characterized in that it contains 0.2 to 4 wt.% of colouring substance of formula IV.

5. A liquid crystalline mixture according to claim 1 or 2, characterized in that it contains 0.2 to 4 wt.% of colouring substance of formula IVa.

6. A liquid crystalline mixture according to claim 1 or 2, characterized in that it contains 0.2 to 4 wt.% of colouring substance of formula III.

7. A liquid crystalline mixture according to claim 1 or 2, characterized in that it contains 0.2 to 8 wt.% of colouring substance of formula II.

8. A liquid crystalline mixture according to any one of claims 1 to 7, characterized in that it contains one or more colouring substances of formula II, one or more colouring substances of formulae III, IV or IVa and one or more colouring substances of formula V.

9. A liquid crystalline mixture according to claim 8, characterized in that it contains 0.1–0.4 parts by weight of colouring substance of formula II and 0.2–0.6 parts by weight of colouring substance of formulae III, IV or IVa per part by weight of colouring substance of formula V.

10. A liquid crystalline mixture according to any one of claims 1 to 9, characterized in that $R^3$ represents straight-chain $C_5$–$C_9$-alkyl, $R^4$ denotes methyl or ethyl and $Z^4$ signifies chlorine and $Z^2$ and $Z^3$ signify hydrogen.

11. A liquid crystalline mixture according to any one of claims 1 to 10, characterized in that it contains one or more compounds of formula I in a total amount of 7–90 wt.%.

12. A liquid crystalline mixture according to any one of claims 1 to 11, characterized in that
$R^1$ signifies alkyl, alkoxy, trans-4-alkylcyclohexyl, 4′-alkyl-4-biphenylyl or p-(trans-4-alkylcyclohexyl)phenyl and
$R^2$ signifies trans-4-alkylcyclohexyl, or
$R^1$ signifies trans-4-alkyl-cyclohexyl and
$R^2$ signifies p-[2-(trans-4-alkylcyclo-hexyl)ethyl]phenyl or 4′-(trans-4-alkylcyclohexyl)-4-biphenylyl.

13. A liquid crystalline mixture according to any one of claims 1 to 12, characterized in that it additionally contains one or more compounds of the general formulae

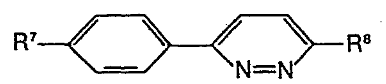

XXIV

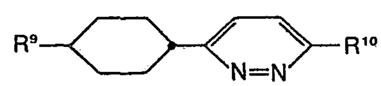

XXV

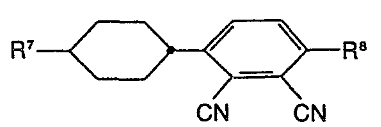

XXVI

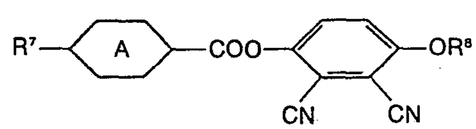

XXVII

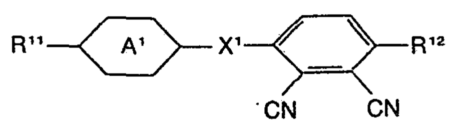

XXVIII

wherein $R^7$ and $R^8$ denote straight-chain $C_1$–$C_7$-alkyl and ring A denotes 1,4-phenylene or trans-1,4-cyclohexylene; $R^9$ signifies straight-chain $C_1$–$C_{12}$-alkyl and $R^{10}$ signifies straight-chain $C_1$–$C_{10}$-alkyl, $C_2$–$C_{10}$–1-alkynyl, $C_1$–$C_{10}$-alkoxy, p-($C_1$–$C_{10}$-alkyl)phenyl, p-($C_1$–$C_{10}$-alkoxy)phenyl or trans-4-($C_1$–$C_{10}$-alkyl)cyclohexyl;
$R^{11}$ and $R^{12}$ denote straight-chain $C_1$–$C_{12}$-alkyl or on an aromatic ring also straight-chain $C_1$–$C_{12}$-alkoxy, or one of the residues $R^{11}$ and $R^{12}$ also denotes a group of the general formula

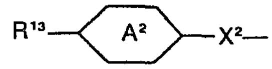

XXIX;

$X^1$ and $X^2$ stand for single covalent bonds or one of these groups also stands for $-CH_2CH_2-$; rings $A^1$

and $A^2$ represent 1,4-phenylene or, insofar as $X^1$ or $X^2$ stands for $-CH_2CH_2-$, also trans-1,4-cyclohexylene; and $R^{13}$ signifies straight-chain $C_1$–$C_{12}$-alkyl or on an aromatic ring $A^2$ also straight-chain $C_1$–$C_{12}$-alkoxy.

14. A liquid crystalline mixture according to any one of claims 1 to 12, characterized in that it additionally contains one or more compounds of the general formulae

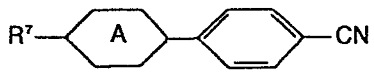
XVI

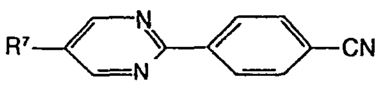
XVII

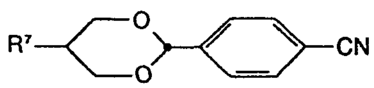
XVIII

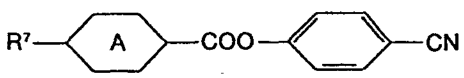
XIX

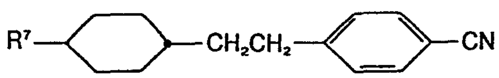
XX

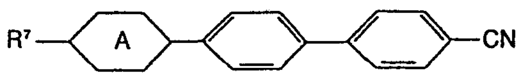
XXI

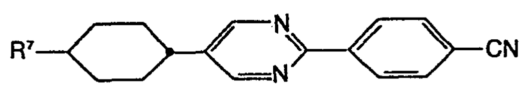
XXII

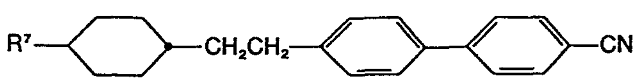
XXIII

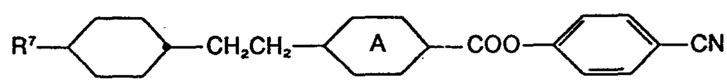
XXIIIa

wherein $R^7$ signifies straight-chain $C_1$–$C_7$-alkyl and ring A signifies 1,4-phenylene or trans-1,4-cyclohexylene.

15. A liquid crystalline mixture according to any one of claims 1 to 13, characterized in that it additionally contains one or more compounds of the general formulae

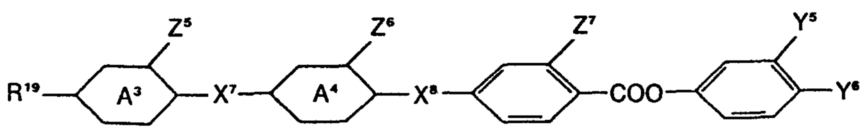
XXX

wherein $X^8$ denotes a single covalent bond or –COO–; $X^7$ signifies a single covalent bond, –COO–, $-CH_2CH_2-$ or, insofar as $X^8$ denotes –COO–, also 1,4-phenylene; ring $A^3$ stands for a benzene ring or for trans-1,4-cyclohexylene; ring $A^4$ represents a benzene ring or, insofar as $X^8$ denotes –COO– and $X^7$ denotes a single covalent bond, –COO– or $-CH_2CH_2-$, also trans-1,4-cyclohexylene; the residues $Z^5$, $Z^6$ and $Z^7$ signify hydrogen or on a benzene ring which is not directly linked with a further ring via a single covalent bond, also halogen, cyano or methyl; $Y^6$ represents cyano, nitro, 2,2-dicyanovinyl or, insofar as $Y^5$ stands for hydrogen, also 2,2-dicyano-1-methylvinyl; $Y^5$ denotes halogen, cyano, $C_1$–$C_3$-alkyl or, insofar as $X^7$ stands for p-phenylene or $Y^6$ stands for nitro or $Z^5$ and/or $Z^6$ is different from hydrogen, also hydrogen; and $R^{19}$ signifies $C_1$–$C_{12}$-alkyl or on a benzene ring also $C_1$–$C_{12}$-alkoxy,

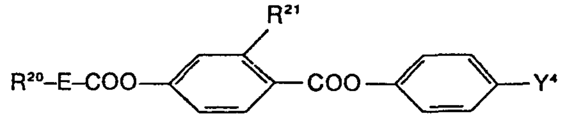
XXXI

wherein $R^{21}$ denotes hydrogen, halogen or cyano; $Y^4$ represents cyano, 2,2-dicyanovinyl or 2,2-dicyano-1-methylvinyl; $R^{20}$ and E together signify p-$R^{20}$-phenyl, trans-4-$R^{20}$-cyclohexyl, 4′-$R^{20}$-4-biphenylyl, p-(trans-4-$R^{20}$-cyclohexyl)phenyl, p-(5-$R^{20}$-2-pyrimidinyl)phenyl, p-[2-(p′-$R^{20}$-phenyl)ethyl]phenyl, p-[2-(trans-4-$R^{20}$-cyclohexyl)ethyl]phenyl, trans-4-[2-(p-$R^{20}$-phenyl)ethyl]cyclohexyl or trans-4-[2-(trans-4-$R^{20}$-cyclohexyl)ethyl]cyclohexyl; and $R^{20}$ denotes straight-chain $C_1$–$C_{12}$-alkyl or on a benzene ring also straight-chain $C_1$–$C_{12}$-alkoxy.

16. The use of a liquid crystalline mixture in accordance with any one of claims 1 to 15 for electro-optical purposes.

**Revendications**

1. Mélange à cristaux liquides contenant un ou plusieurs composés de formule générale

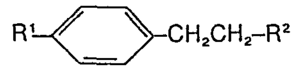

I

dans laquelle $R^1$ représente un groupe alkyle, alcoxy, p-alkylphényle, p-alcoxyphényle, trans-4-alkylcyclohexyle, 4′-alkyl-4-biphénylyle, p-(trans-4-alkylcyclohexyl)-phényle, 2-(trans-4-alkylcyclohexyl)-éthyle ou p-[2-(trans-4-alkylcyclohexyl)-éthyl]-phényle et $R^2$ représente un groupe trans-4-alkylcyclohexyle ou bien $R^1$ représente un groupe trans-4-alkylcyclohexyle et $R^2$ un groupe p-(trans-4-alkylcyclohexyl)phényle, p-[2-(trans-4-alkylcyclohexyl)-éthyl]-phényle ou 4′-(trans-4-alkylcyclohexyl)-4-biphénylyle, ou bien $R^1$ représente un groupe p-alkylphényle et $R^2$ un groupe p-[2-(trans-4-alkylcyclohexyl)-éthyl]-phényle, les groupes alkyle et alcoxy contenus dans les substituants $R^1$ et $R^2$ étant des groupes à chaîne droite en $C_1$–$C_7$, et un ou plusieurs colorants dichroïques de formules générale

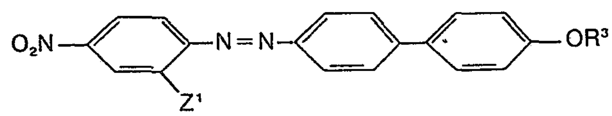

II

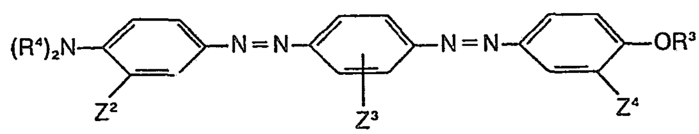

III

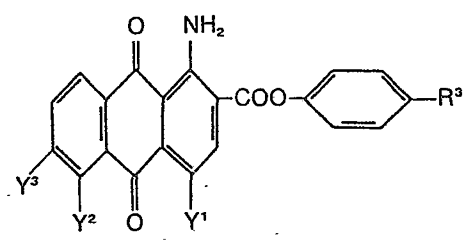

IV

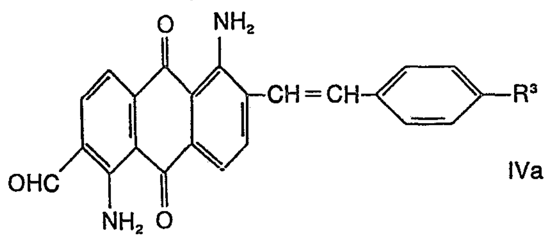

IVa

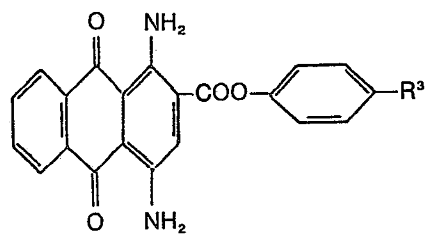

V

dans lesquelles $R^3$ représente un groupe alkyle à chaîne droite en $C_1$–$C_{12}$ et $R^4$ un groupe alkyle à chaîne droite en $C_1$–$C_4$, $Z^1$ représente l'hydrogène ou le chlore, l'un des symboles $Z^2$, $Z^3$ et $Z^4$ représente le chlore et les deux autres l'hydrogène, et $Y^1$ représente l'hydrogène, $Y^2$ un groupe amino et $Y^3$ un groupe méthyle ou bien $Y^1$ représente un groupe hydroxy et $Y^2$ et $Y^3$ l'hydrogène.

2. Mélange à cristaux liquides selon la rev. 1, caractérisé en ce qu'il contient de 0,2 à 12% en poids de colorants de formules II à V et IVa.

3. Mélange à cristaux liquides selon la rev. 1 ou 2, caractérisé en ce qu'il contient de 0,2 à 6% en poids d'un colorant de formule V.

4. Mélange à cristaux liquides selon la rev. 1 ou 2, caractérisé en ce qu'il contient de 0,2 à 4% en poids d'un colorant de formule IV.

5. Mélange à cristaux liquides selon la rev. 1 ou 2, caractérisé en ce qu'il contient de 0,2 à 4% en poids d'un colorant de formule IVa.

6. Mélange à cristaux liquides selon la rev. 1 ou 2, caractérisé en ce qu'il contient de 0,2 à 4% en poids d'un colorant de formule III.

7. Mélange à cristaux liquides selon la rev. 1 ou 2, caractérisé en ce qu'il contient de 0,2 à 8% en poids d'un colorant de formule II.

8. Mélange à cristaux liquides selon l'une des rev. 1 à 7, caractérisé en ce qu'il contient un ou plusieurs colorants de formule II, un ou plusieurs colorants de formules III, IV ou IVa et un ou plusieurs colorants de formule V.

9. Mélange à cristaux liquides selon la rev. 8, caractérisé en ce qu'il contient de 0,1 à 0,4 partie en poids d'un colorant de formule II et de 0,2 à 0,6 partie en poids de colorants de formules III, IV ou IVa par partie en poids d'un colorant de formule V.

10. Mélange à cristaux liquides selon l'une des rev. 1 à 9, caractérisé en ce que $R^3$ représente un groupe alkyle à chaîne droite en $C_5$–$C_9$, $R^4$ représente un groupe méthyle ou éthyle et $Z^4$ représente le chlore et $Z^2$ et $Z^3$ l'hydrogène.

11. Mélange à cristaux liquides selon l'une des rev. 1 à 10, caractérisé en ce qu'il contient un ou plusieurs composés de formule I en quantité totale de 7 à 90% en poids.

12. Mélange à cristaux liquides selon l'une des rev. 1 à 11, caractérisé en ce que $R^1$ représente un groupe alkyle, alcoxy, trans-4-alkylcyclohexyle, 4'-alkyl-4-biphénylyle ou p-(trans-4-alkylcyclohexyl)-phényle et $R^2$ représente un groupe trans-4-alkylcyclohexyle, ou bien $R^1$ représente un groupe trans-4-alkylcyclohexyle et $R^2$ un groupe p-[2-(trans-4-alkylcyclohexyl)-éthyl]-phényle ou 4'-(trans-4-alkylcyclohexyl)-4-biphénylyle.

13. Mélange à cristaux liquides selon l'une des rev. 1 à 12, caractérisé en ce qu'il contient en outre un ou plusieurs composés de formules générales

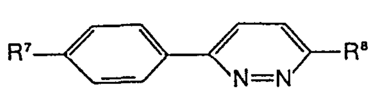

XXIV

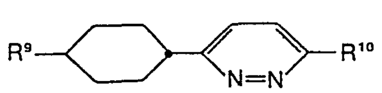

XXV

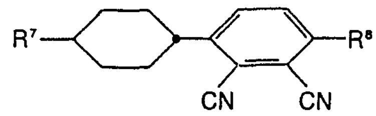

XXVI

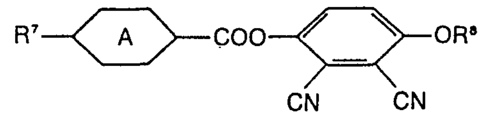

XXVII

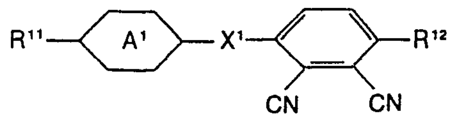

XXVIII

dans lesquelles $R^7$ et $R^8$ représentent des groupes alkyle à chaîne droite en $C_1$–$C_7$ et le cycle A est un cycle 1,4-phénylène ou trans-1,4-cyclohexylène; $R^9$ représente un groupe alkyle à chaîne droite en $C_1$–$C_{12}$ et $R^{10}$ un groupe alkyle à chaîne droite en $C_1$–$C_{10}$, un groupe 1-alcynyle en $C_2$–$C_{10}$, alcoxy en $C_1$–$C_{10}$, p-(alkyle en $C_1$–$C_{10}$)-phényle, p-(alcoxy en $C_1$–$C_{10}$)-phényle ou trans-4-(alkyle en $C_1$–$C_{10}$)-cyclohexyle; $R^{11}$ et $R^{12}$ représentent un groupe alkyle à chaîne droite en $C_1$–$C_{12}$ ou encore, sur un noyau aromatique, un groupe alcoxy à chaîne droite en $C_1$–$C_{12}$, ou bien l'un des symboles $R^{11}$ et $R^{12}$ représente également un groupe de formule générale

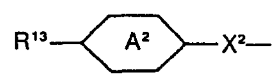

XXIX

$X^1$ et $X^2$ représentent des liaisons covalentes simples, l'un de ces symboles pouvant également représenter un groupe $-CH_2CH_2-$; les cycles $A^1$ et $A^2$ sont des cycles 1,4-phénylène ou bien encore, lorsque $X^1$ ou $X^2$ représente $-CH_2CH_2-$, des cycles trans-1,4-cyclohexylène; et $R^{13}$ représente un groupe alkyle à chaîne droite en $C_1$–$C_{12}$ ou bien encore, sur un noyau aromatique $A^2$, un groupe alcoxy à chaîne droite en $C_1$–$C_{12}$.

14. Mélange à cristaux liquides selon l'une des rev. 1 à 12, caractérisé en ce qu'il contient en outre un ou plusieurs composés de formules générales

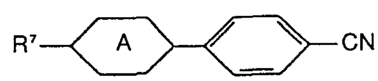

XVI

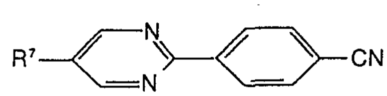

XVII

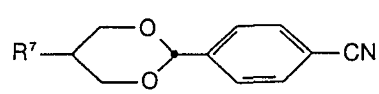

XVIII

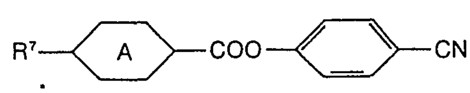

XIX

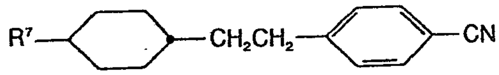

XX

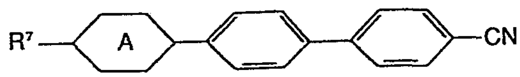

XXI

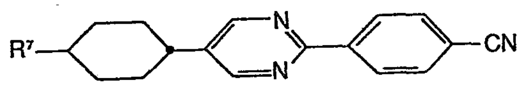

XXII

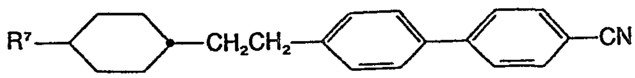

XXIII

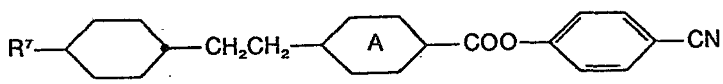

XXIIIa

dans lesquelles $R^7$ représente un groupe alkyle à chaîne droite en $C_1$–$C_7$ et le cycle A est un cycle 1,4-phénylène ou trans-1,4-cyclohexylène.

15. Mélange à cristaux liquides selon l'une des rev. 1 à 13, caractérisé en ce qu'il contient en outre un ou plusieurs composés de formules générales

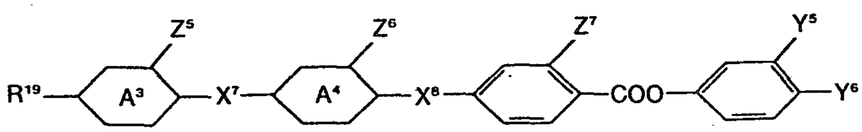

XXX

dans laquelle $X^8$ représente une liaison covalente simple ou un groupe –COO–; $X^7$ représente une liaison covalente simple, un groupe –COO–, $-CH_2CH_2-$ ou bien encore, lorsque $X^8$ représente –COO–, un cycle 1,4-phénylène; le cycle $A^3$ est un cycle benzénique ou un cycle trans-1,4-cyclohexylène; le cycle $A^4$ est un cycle benzénique ou bien encore, lorsque $X^8$ représente –COO– et $X^7$ une liaison covalente simple, un groupe –COO– ou $-CH_2CH_2-$, un cycle trans-1,4-cyclohexylène; les symboles $Z^5$, $Z^6$ et $Z^7$ représentent l'hydrogène ou bien encore, sur un cycle benzénique qui n'est pas relié directement par une liaison covalente simple à un autre cycle, des halogènes, des groupes cyano ou méthyle; $Y^6$ représente un groupe cyano, nitro, 2,2-dicyanovinyle ou bien encore, lorsque $Y^5$ représente l'hydrogène, un groupe 2,2-dicyano-1-méthylvinyle; $Y^5$ représente un halogène, un groupe cyano, alkyle en $C_1$–$C_3$ ou bien encore, lorsque $X^7$ représente un groupe p-phénylène ou bien $Y^6$ un groupe nitro, ou bien que $Z^5$ et/ou $Z^6$ ne représentent pas l'hydrogène, l'hydrogène; et $R^{19}$ représente un groupe alkyle en $C_1$–$C_{12}$ ou bien encore, sur un cycle benzénique, un groupe alcoxy en $C_1$–$C_{12}$,

ou bien

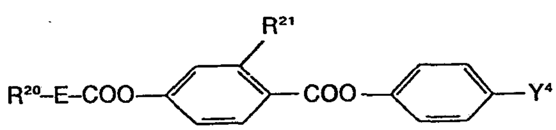

XXXI

dans laquelle $R^{21}$ représente l'hydrogène, un halogène ou un groupe cyano; $Y^4$ représente un groupe
cyano, 2,2-dicyanovinyle ou
2,2-dicyano-1-méthylvinyle;
$R^{20}$ et E forment ensemble un groupe
p–$R^{20}$-phényle, trans-4–$R^{20}$-cyclohexyle,
4'–$R^{20}$–4-biphénylyle,
p-(trans-4–$R^{20}$-cyclohexyl)-phényle,
p-(5–$R^{20}$–2-pyrimidinyl)-phényle,
p-[2-(p'–$R^{20}$-phényl)-éthyl]-phényle,
p-[2-(trans-4–$R^{20}$-cyclohexyl)-éthyl]-phényle,
trans-4-[2-(p–$R^{20}$-phényl)-éthyl]-cyclohexyle ou
trans-4-[2-(trans-4–$R^{20}$-cyclohexyl)-éthyl]-cyclohexyle;
et $R^{20}$ représente un groupe alkyle à chaîne droite en $C_1$–$C_{12}$ ou bien encore, sur un cycle benzénique, un groupe alcoxy à chaîne droite en $C_1$–$C_{12}$.

16. Utilisation d'un mélange à cristaux liquides selon l'une des rev. 1 à 15 dans des applications électro-optiques.